# EUROPEAN PATENT APPLICATION

(11) **EP 3 588 250 A1**
(43) Date of publication of application: **01.01.2020**
(21) Application number: 19176000.8
(22) Date of filing: 22.05.2019
(51) Int. Cl.: G06F 3/01

(54) **REAL-WORLD HAPTIC INTERACTIONS FOR A VIRTUAL REALITY USER**

(30) Priority: 25.06.2018 US 201816017353
(71) Applicant: Immersion Corporation, San Jose, CA 95134 (US)
(72) Inventor: RIHN, William S., Redwood City, CA California 94042 (US); BIRNBAUM, David M., Van Nuys, CA California 91411 (US); WU, Liwen, Montreal, Québec H2X 2L6 (CA)
(74) Representative: Hofstetter, Schurack & Partner

(57) **Abstract**

Methods, systems, and non-transitory computer readable mediums for presenting haptic interactions using a virtual reality system are provided. A virtual user is tracked in a virtual reality environment, the virtual user including a virtual representation of a real-world user in a real-world environment. A relative virtual location for the virtual object relative to the virtual user is determined. A haptic profile for the virtual object is identified. A real-world object is provided in a real-world location relative to the real-world user that corresponds to the relative virtual location, where a haptic property of the real-world object corresponds to the haptic profile for the virtual object

## Description

### FIELD

One embodiment is generally directed to a virtual reality system that uses haptic profiles to present real-world haptic interactions to a virtual reality user.

### BACKGROUND INFORMATION

"Haptics" relates to a tactile, sensory, and force providing technology that takes advantage of the sense of touch of a user by applying haptic feedback, tactile effects (i.e., "haptic effects"), and sensory effects, such as textures, temperatures, forces, vibrations, motions, and other suitable haptic effects. In some implementations, computing devices can be configured to generate haptic effects. In some instances, calls to embedded hardware capable of generating haptic signals that are transmitted to haptic output devices (such as actuators) or devices capable of providing objects with a certain haptic property (e.g., real-world objects that correspond to a haptic profile) can be programmed within an operating system ("OS") of a device. These calls can specify which haptic effect to play.

Virtual reality, augmented reality, and/or mixed reality systems have progressed in their ability to simulate real-world effects in a virtual world. In particular, head and body tracking technology has allowed a point-of- view ("POV") display that tracks user movements, such as head movements, and provides a corresponding POV change in the virtual world. However, virtual systems have been limited in the physical feedback presented to users. For example, current virtual systems are limited in their ability to present a user with a virtual haptic feel that corresponds to the feel of a real-world tree.

### SUMMARY

Embodiments include methods, systems, and computer readable mediums for presenting haptic interactions using a virtual reality system. A virtual user is tracked in a virtual reality environment, the virtual user comprising a virtual representation of a real-world user in a real-world environment. A relative virtual location for the virtual object relative to the virtual user is determined. A haptic profile for the virtual object is identified. In addition, a real-world object is provided in a real-world location relative to the real-world user that corresponds to the relative virtual location, where a haptic property of the real-world object corresponds to the haptic profile for the virtual object.

It is to be understood that both the foregoing general description and the following detailed description are exemplary and explanatory and are not intended to limit the disclosure to the described examples.

### BRIEF DESCRIPTION OF THE DRAWINGS

Further embodiments, details, advantages, and modifications will become apparent from the following detailed description of the preferred embodiments, which is to be taken in conjunction with the accompanying drawings.
Fig. 1 is a block diagram of a computer server/system in accordance with various embodiments.
Fig. 2 illustrates an example system for presenting rich haptic interactions based on a virtual world according to various embodiments.
Fig. 3 illustrates an example virtual system peripheral for presenting rich haptic interactions according to various embodiments.
Figs. 4A-4C illustrate diagrams of a virtual world with a virtual object and a corresponding real-world with a real-world object in accordance with various embodiments.
Figs. 5A-5B are flow diagrams for presenting rich haptic interactions in a virtual world according to various embodiments.
Fig. 6 illustrates an example drone equipped system for presenting rich haptic interactions according to various embodiments.
Fig. 7 is a flow diagram for presenting rich haptic interactions in a virtual world using a drone according to various embodiments.
Fig. 8 is a state diagram for presenting rich haptic interactions in a virtual world using a drone according to various embodiments
Fig. 9 is a flow diagram for instructing a plurality of drones to present rich haptic interactions according to various embodiments.
Fig. 10 is another flow diagram for presenting rich haptic interactions in a virtual world according to various embodiments.

### DETAILED DESCRIPTION

One embodiment presents haptic interactions for users of a virtual reality ("VR"), augmented reality ("AR"), or mixed reality ("MR") system. In one embodiment, a virtual user is tracked in a virtual environment, and haptic profiles for virtual objects that the user may encounter are identified. For example, a haptic profile for a virtual tree can be identified, for instance when the virtual user is proximate to the virtual tree. In the real world, a real-world object with a haptic property that corresponds to the haptic profile of the virtual tree can be provided in a location that corresponds to a relative virtual location of the virtual tree. For example, a relative location for the virtual tree relative to the virtual user (e.g., a location for the virtual tree that is defined by its relationship to the location for the virtual user) can be tracked, and the real-world object can be provided in a real-world location relative to the real-world user that corresponds to the relative virtual location. Based on the provided real-world object, when the virtual user touches the virtual tree, the real-world user will feel the haptic property of the real-world object, thus the user is presented real-world haptic interactions that correspond to interactions in the virtual world. In other examples, the virtual user can touch other virtual objects, such as a virtual dog, a virtual running motor vehicle, or a sticky substance like virtual gum, and real-world objects with corresponding haptic properties can be provided, such as a soft furry object, a hot and/or vibrating metallic object, a sticky object, and the like.

The providing can be achieved using a variety of systems and/or techniques. For example, a haptic swatch that includes multiple surfaces with differing haptic properties can be provided, where the haptic swatch is configured to present a haptic property that corresponds with the haptic profile in the virtual environment (e.g., haptic profile of the virtual tree, virtual dog, virtual running motor vehicle, and the like). Other real-world objects that include haptic properties can similarly be provided. In some embodiments, the real-world objects can be moved to different locations based on the movements of the virtual user and/or virtual object by implementing a variety of techniques. For example, a robotics system or mechanical member can be used to move real-world objects (e.g., haptic swatches) to relative locations that correspond to a user's virtual interactions. In another example, a drone can be used to move the real-world objects to the relative locations.

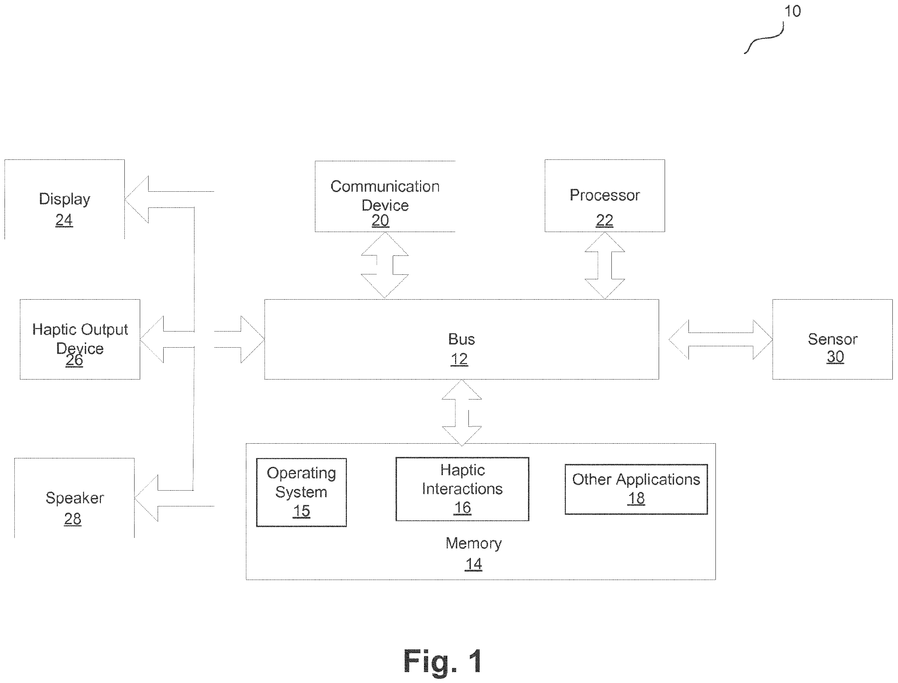

Fig. 1 illustrates a block diagram of a system 10 in accordance with various embodiments. In some embodiments, system 10 may function as a VR/AR/MR system as disclosed below. In these embodiments, system 10 may not include one or more of the modules depicted in Fig. 1, such as a sensor 30, a speaker 28, or a display 24.

In some embodiments, system 10 is part of or in communication with a mobile device (e.g., a smartphone) or a non-mobile device (e.g., a game controller) to interact with a virtual world. System 10 can also be part of or in communication with a wearable device to interact with a virtual world. Examples of wearable devices include wrist bands, headbands, eyeglasses, rings, leg bands, footwear, arrays integrated into clothing, or any other type of device that a user may wear on a body or can be held by a user. Some wearable devices can be haptically enabled, meaning they include mechanisms to generate haptic effects. In some embodiments, system 10 can include a stand-alone computing device, such as a gaming system, for providing a virtual world to a user of the system. In some embodiments, system 10 can be separate from the device (e.g., a mobile device or a wearable device).

Although shown as a single system, the functionality of system 10 can be implemented as a distributed system. System 10 includes a bus 12 or other communication mechanism for communicating information, and a processor 22 coupled to bus 12 for processing information. Processor 22 may be any type of general or specific purpose processor. System 10 further includes a memory 14 for storing information and instructions to be executed by processor 22. Memory 14 can include any combination of random access memory ("RAM"), read only memory ("ROM"), static storage such as a magnetic or optical disk, or any other type of transitory or non-transitory computer-readable medium.

A computer-readable medium may be any available medium that can be accessed by processor 22 and may include both a volatile and nonvolatile medium, a removable and non-removable medium, a communication medium, and a storage medium. A communication medium may include computer-readable instructions, data structures, program modules, or other data in a modulated data signal such as a carrier wave or other transport mechanism, and may include any other form of information delivery medium known in the art. A storage medium may include RAM, flash memory, ROM, erasable programmable read-only memory ("EPROM"), electrically erasable programmable read-only memory ("EEPROM"), registers, hard disks, removable disks, compact disk read-only memory ("CD-ROM"), or any other form of a storage medium known in the art.

In one embodiment, memory 14 stores software modules that provide functionality when executed by processor 22. The modules include an operating system 15 that provides operating system functionality for system 10. The modules further include a haptic interactions module 16 that presents haptic interactions for a user based on a virtual world, as disclosed in more detail herein. In certain embodiments, haptic interactions module 16 can include a plurality of modules, where each module is configured with specific individual functionality for providing haptic effects. System 10 typically includes one or more additional application modules 18 to include additional functionality, such as TouchSense® software by Immersion Corp.

System 10, in embodiments that transmit and/or receive data from remote sources, further includes a communication device 20, such as a network interface card, to provide mobile wireless network communication, such as infrared, radio, Wi-Fi, cellular network communication, etc. In other embodiments, communication device 20 provides a wired network connection, such as an Ethernet connection, a modem, etc.

Processor 22 is further coupled via bus 12 to a display 24, such as a Liquid Crystal Display ("LCD"), for displaying a graphical representation or user interface ("Ul") to a user. The display 24 may be a touch-sensitive input device, such as a touch screen, configured to send and receive signals from processor 22, and may be a multi-touch touch screen.

System 10, in one embodiment, further includes a haptic output device 26. Processor 22 may transmit a haptic signal associated with a haptic effect to haptic output device 26, which in turn outputs haptic effects such as vibrotactile haptic effects, electrostatic friction haptic effects, deformation haptic effects, etc. Haptic output device 26 may be an actuator and may include an actuator drive circuit. Haptic output device 26 may be, for example, an electric motor, an electro-magnetic actuator, a voice coil, a shape memory alloy, an electro-active polymer, a solenoid, an eccentric rotating mass motor ("ERM"), a linear resonant actuator ("LRA"), a piezoelectric actuator, a high bandwidth actuator, an electroactive polymer ("EAP") actuator, etc. In alternate embodiments, system 10 may include one or more additional haptic output devices, in addition to haptic output device 26. Alternatively or additionally, haptic output device 26 may operate according to any other haptic technology such as thermal displays (e.g., hot/cold), electrotactile stimulation (i.e., stimulation of tactile receptors with electric current), kinesthetic feedback, etc. Yet another alternative or additional embodiment may implement electrical muscle stimulations such as a task that requires a user to determine what movement or movements the system is making them do and/or making them feel like doing.

Haptic output device 26 is a device configured to output any form of haptic effects, such as vibrotactile haptic effects, electrostatic friction haptic effects, deformation haptic effects, etc., in response to a drive signal. Accordingly, haptic output device 26 may be an actuator, or in alternate embodiments, a non-mechanical or a non-vibratory device such as a device that uses electrostatic friction ("ESF") or ultrasonic surface friction ("USF"), a device that induces acoustic radiation pressure with an ultrasonic haptic transducer, a device that uses a haptic substrate and a flexible or deformable surface or shape changing device and that may be attached to a user's body, a device that provides projected haptic output such as a puff of air using an air jet, a laser-based stimulator, a sound-based stimulator, and any other suitable haptic interaction capable device.

Further, in other alternate embodiments, system 10 may not include haptic output device 26, and a separate device from system 10 includes a haptic output device that generates the haptic effects, and system 10 sends generated haptic signals to that device through communication device 20.

In one embodiment, haptic output device 26 may be a standard definition ("SD") actuator that generates vibratory haptic effects at a frequency or frequencies limited by the design of the actuator and/or the haptic rendering system. Examples of an SD actuator include an ERM and an LRA. In contrast to an SD actuator, a high definition ("HD") actuator or high fidelity actuator such as a piezoelectric actuator or an EAP actuator is capable of generating high bandwidth and/or high definition haptic effects at multiple frequencies. HD actuators are characterized by their ability to produce wide bandwidth tactile effects with variable amplitude, variable frequency, and with a fast response to transient drive signals. However, HD actuators are generally more expensive than SD actuators. Some devices consequently include only one or more SD actuators, instead of any HD actuators. Therefore, some embodiments may leverage one or more speakers 28 in a device in combination with the SD actuators to simulate HD haptic effects and provide an HD-like haptic experience without the need for HD actuators.

In some embodiments, haptic output device 26 can include a haptic swatch. A haptic swatch can be an object or device that includes a plurality of materials or surfaces with differing haptic properties. For example, a haptic swatch can include a first haptic material with a rough haptic property and a second haptic material with a smooth haptic property. In some embodiments, the haptic properties of a swatch can correspond to the feel of a variety of objects, such as a haptic material that corresponds to the rough tactile feel of a tree and another haptic material that corresponds to the rough tactile feel of sandpaper. In this example, while both objects include a rough tactile feel, the haptic properties for the objects are different, and the haptic swatch can include varying haptic materials with haptic properties that capture this difference. For example, a haptic profile for a tree can be represented by relatively large bumps or notches that resemble a coarse roughness of tree bark and a haptic profile for sandpaper can be represented by relatively small surface elements that resemble the fine roughness of sandpaper. In this example, a haptic swatch can include a haptic material corresponding to the haptic profile for tree bark and a separate haptic material corresponding to the haptic profile for sandpaper.

In some embodiments, a haptic swatch can be a non-moving object that includes various surfaces or materials with differing haptic properties. In other embodiments, a haptic swatch can include moving parts, such as a rotating assembly that can rotate to expose the differing haptic surfaces or materials to a user. Haptic output device 26 can include a robotic arm assembly, drone, or other movable mechanism that can be used to move/provide the haptic swatch in various locations.

System 10, in one embodiment, further includes a speaker 28. Processor 22 may transmit an audio signal to speaker 28, which in turn outputs audio effects. Speaker 28 may be, for example, a dynamic loudspeaker, an electrodynamic loudspeaker, a piezoelectric loudspeaker, a magnetostrictive loudspeaker, an electrostatic loudspeaker, a ribbon and planar magnetic loudspeaker, a bending wave loudspeaker, a flat panel loudspeaker, a heil air motion transducer, a plasma arc speaker, a digital loudspeaker, etc. In alternate embodiments, system 10 may include one or more additional speakers, in addition to speaker 28 (not illustrated in Fig. 1). Further, in other alternate embodiments, system 10 may not include speaker 28, and a separate device from system 10 includes a speaker that outputs the audio effects, and system 10 sends audio signals to that device through communication device 20. In some embodiments, system 10 may include a head-mounted display ("HMD"), for example.

System 10, in one embodiment, further includes a sensor 30. Sensor 30 may be configured to detect a form of energy, or other physical property, such as, but not limited to, sound, movement, acceleration, biological signals, distance, flow, force/pressure/strain/bend, humidity, linear position, orientation/inclination, radio frequency, rotary position, rotary velocity, manipulation of a switch, temperature, vibration, visible light intensity, etc. Sensor 30 may further be configured to convert the detected energy, or other physical property, into an electrical signal, or any signal that represents virtual sensor information. Sensor 30 may be any device, such as, but not limited to, an accelerometer, a galvanic skin response sensor, a capacitive sensor, a hall effect sensor, an infrared sensor, an ultrasonic sensor, a pressure sensor, a fiber optic sensor, a flexion sensor (or bend sensor), a force-sensitive resistor, a load cell, a LuSense CPS2 155, a miniature pressure transducer, a piezo sensor, a strain gauge, a hygrometer, a linear position touch sensor, a linear potentiometer (or slider), a linear variable differential transformer, a compass, an inclinometer, a magnetic tag (or a radio frequency identification ("RFID") tag), a rotary encoder, a rotary potentiometer, a gyroscope, an on-off switch, a temperature sensor (such as a thermometer, thermocouple, resistance temperature detector, thermistor, temperature-transducing integrated circuit, etc.), a microphone, a photometer, an altimeter, a biological monitor, a camera, a light-dependent resistor, etc., or any device that outputs an electrocardiogram, an electroencephalogram, an electromyograph, an electrooculogram, an electropalatograph, or any other electrophysiological output.

In alternate embodiments, system 10 may include one or more additional sensors, in addition to sensor 30 (not illustrated in Fig. 1). In some of these embodiments, sensor 30 and the one or more additional sensors may be part of a sensor array, or some other type of collection/arrangement of sensors. Further, in other alternate embodiments, system 10 may not include sensor 30, and a separate device from system 10 includes a sensor that detects a form of energy, or other physical property, and converts the detected energy, or other physical property, into an electrical signal, or other type of signal that represents virtual sensor information. The device may then send the converted signal to system 10 through communication device 20.

Generally, some known systems may present haptic effects in a VR, AR, or MR environment. VR refers to using software to generate realistic images, sounds, and other sensations that replicate a real environment (or create an imaginary setting) and simulate a user's "presence" in this environment by enabling the user to interact with this space and any objects depicted therein using specialized display screens, projectors, or other devices. VR may be provided by systems such as "Oculus Rift" from Facebook Inc., "PlayStation VR" from Sony Corp., "Gear VR" from Samsung Electronics Co. Ltd., "Vive VR" from HTC Corp., "Open Source VR" from Razer Inc., and the like. AR refers to a live direct or indirect view of a physical real world environment whose elements are augmented (or supplemented) by computer-generated sensory input such as sound, video, graphics, GPS data, etc. AR may be provided by smart glasses such as "Google Glass" from Alphabet Inc., "DAQRI Smart Helmet" from DAQRI, LLC, or "Moverio" from Seiko Epson Corp. MR (also referred to as hybrid reality) refers to the merging of real and virtual worlds to produce new environments and visualizations where physical and digital virtual objects co-exist and interact in real time. Unlike AR, the virtual objects in MR interact with real objects and are not merely added as a virtual overlay on top of the real objects. MR may be provided by systems such as "HoloLens" from Microsoft Corp.

Some known systems provide haptic feedback to a user of a VR/AR/MR system via pre-configured controllers of the VR/AR/MR system. For example, Valve Corp. provides an LRA-based "Rumblepad," Facebook Inc. provides a "Touch" controller, HTC provides a "Vive" controller, NeuroDigital Technologies, SL provides "GloveOne" LRA-based haptic gloves, Nod Inc. provides "Backspin" a ring-based controller, Virtuix Inc. provides "Virtuix Omni", and Haptech Inc. provides an "Infinity" rifle controller. However, VR systems have not provided rich haptic interactions beyond simple haptic feedback, such as actuators triggered to cause vibrations. For example, some controllers such as Vive and Touch use an actuator and implement different proprietary application programming interface ("API") methods for calling the actuator to output a haptic feedback effect (e.g., calling a motor and sending voltages to the motor to generate vibrations). These VR implementations have traditionally lacked rich real-world interactions for real-world user that correspond to virtual interactions for the virtual user, such as touching a real-world material that feels like animal fur when the virtual user touches a virtual animal.

In contrast to the known systems, embodiments allow for VR/AR/MR systems to provide real-world objects in locations relative to a real-world user to enhance the immersive experience for the user in the virtual world by way of rich haptic interactions. Embodiments implement a haptic profiling technique for virtual world objects or surfaces such that real-world haptic materials or experiences that correspond to the haptic profiles in the virtual world can be provided. For example, real-world objects, such as a haptic swatch, can be positioned relative to the real-world user based on tracked locations for a virtual user in the virtual world, and the real-world objects can include haptic surfaces or materials that correspond to one or more haptic profiles for virtual objects in the virtual world. Thus, the user is presented with a rich haptic interaction that corresponds to the virtual user's VR/AR/MR interactions.

In one embodiment, for example, a user in a VR/AR/MR environment may use a multi-sensor system that allows the user to place modular sensors such as wearable sensors on various body parts/areas such as chest, back, right hand, left hand, right foot, left foot, forehead, etc. In some embodiments, one or more of the modular sensors can also include actuators for generating haptic feedback. One embodiment, the locations of the sensors are determined/tracked in relation to each other as well as within the VR/AR/MR environment.

Accordingly, embodiments can trigger haptic interactions based on where a virtual body part (e.g., virtual hands) is located in the VR/AR/MR environment. In one embodiment, when a haptic track is supplied by a haptic designer, the original intent of the haptic designer is determined, and based on the original intent, corresponding haptic interactions are presented. For example, the original intent of the haptic designer may be determined by reverse mapping the haptic interaction to a corresponding virtual world context, such as based on a look-up table that stores haptic profiles for virtual objects, and determining the haptic profile for which a haptic interaction has been designed.

In an embodiment, a user may be in an exploration virtual environment using a VR headset and one or more controllers that present virtual world interactions for the user's virtual presence (or the virtual user). In some embodiments, in addition to the headset and controller inputs, the user may also have wearable sensors placed on various parts of their body (e.g., chest, hands, feet, fingers, and the like). The sensors can be networked to the VR system such that they are also positionally sensed and motion tracked in the VR game space. When these body parts interact with the game play, rich haptic interactions can be presented to allow the user to feel virtual objects based on the haptic properties of real-world materials.

For example, a virtual user may see a virtual tree in the distance and move closer to the virtual tree until it is close enough to touch. Based on the virtual user's proximity to the virtual tree, a tracked location of the virtual user relative to the virtual tree (or a tracked location of a body part of the virtual user, such as a hand) and a haptic profile for the virtual tree, a real-world object that has a haptic property corresponding to the haptic profile for the virtual tree can be provided in a real-world location relative to the real-world user that corresponds to the location of the virtual tree relative to the tracked location of the virtual user (or the virtual user's hand or fingers). In this example, the user can interact with the virtual environment using a VR controller in one hand, but can use the other hand to experience rich haptic interactions, such as feeling the real-world object. In other embodiments, the user can experience haptic interactions in any suitable manner (e.g., using gloves that expose portions of the user's hands/fingers, or using any other suitable VR configuration).

In some embodiments, a VR system can be equipped with room-scale functionality, where the user can be redirected within a predetermined real-world environment as the virtual user explores a virtual world. In such embodiments, the real-world object that presents the rich haptic interaction can be moved along with the user to maintain the relative positioning of the object.

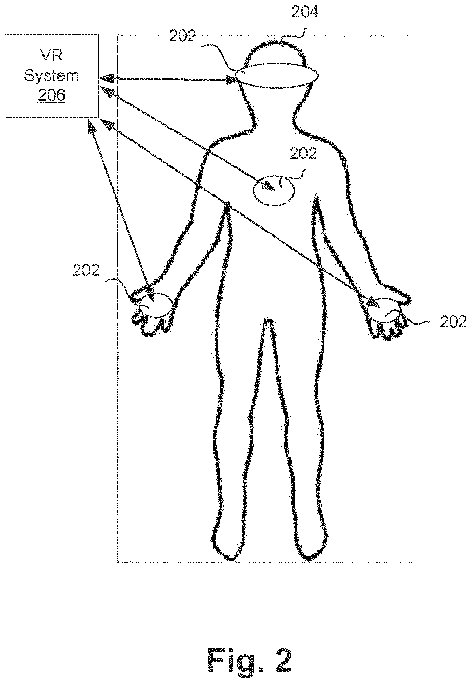

Fig. 2 illustrates an example of a system 200 for presenting rich haptic interactions to a user in a virtual world. In system 200, a number of input points 202 are placed at various body locations of a user 204. Each input point 202 can include one or more sensors, such as sensor 30 of Fig. 1, a haptic output device, such as an actuator, as well as functionality to communicate (e.g., wirelessly or through a wire) with a VR system 206. VR system 206 can be any of a VR, AR, or MR system.

Each input point 202 may connect to VR system 206 directly through a WiFi or other wireless network or indirectly through a gateway using Bluetooth or other networking technologies. Each input point 202 may also connect directly to VR system 206 using Bluetooth or other short-range wireless technologies. In some embodiments, the communication may first be established through near field communication ("NFC"), Wi-Fi, or other wireless technologies, and then switched to a more efficient short-range technology such as Bluetooth.

In one embodiment, once an input point 202 is connected to VR system 206 through wired or wireless communication, it can communicate with the system to present virtual world interactions. It also may communicate with VR system 206 to provide various information, for example, information about its capabilities, its sensor readings, and the like, and to trigger feedback, such as haptic feedback.

In one embodiment, VR system 206 implements position sensing functionality and tracks the location of input points 202 relative to each other as well as in the 3D virtual space and on user 204. Any known position sensing functionality may be implemented in VR system 206 to track input points 202, such as magnetic tracking (measuring the intensity of the magnetic field in various directions), acoustic tracking (measuring the time it takes a known acoustic signal to reach known receivers), inertial tracking (using an accelerometers and gyroscopes), optical tracking (using various cameras to obtain positional information), etc., or any other proximity sensing functionality (detecting the presence of nearby objects without any physical contact). In one embodiment, for example, VR system 206 includes one or more remote sensors such as cameras or depth sensors that implement position and motion tracking functionality and detect the presence of user 204 and or detect various body parts of user 204.

In some embodiments, a VR system 206 is equipped with room-scale functionality, where user 204 can be redirected within a predetermined real-world environment as the virtual user corresponding to user 204 explores a virtual world. For example, a predetermined real-world space can include predetermined boundaries and a plurality of sensors for tracking the space. User 204 can be tracked within the space, and redirected within the space as his virtual user explores a virtual world.

In some embodiments, input point 202 at the head of user 204 can be a VR headset, such as an Oculus Rift headset, a Google Dream headset, a Samsung Gear headset, and the like. Input points 202 at the hands of user 204 can be one or more of a VR controller, a VR glove, a VR wearable, or any other suitable VR input device configured to be used by the hands of a user. Example VR controllers or VR gloves can be the "GloveOne", "Touch", "Vive", and the like. An example VR wearable is "Backspin" or any other suitable wearable device. Input points 202 at other locations of user 204 can be wearable devices that include sensors, or any other suitable VR device. In one embodiment, an input point 202 can be attached to a strap (e.g., Velcro) so that it can be secured to a body part of user 204. In one embodiment, multiple input points 202 can be embedded within pockets in a fabric so that they can be worn on the body of user 204. In some embodiments, a "LeapMotion" device from LeapMotion, Inc. (or a LeapMotion system) can be used to track appendages, such as hands and/or fingers, of user 204.

Each input point shown in Fig. 2, and in any of the following figures, may be implemented by system 10 of Fig. 1 in one embodiment, and may include all or a subset of the elements shown in Fig. 1. Further, VR system 206 shown in Fig. 2, and the VR/AR/MR systems shown in any of the following figures, may be implemented by system 10 of Fig. 1 in one embodiment, and may include all or a subset of the elements shown in Fig. 1.

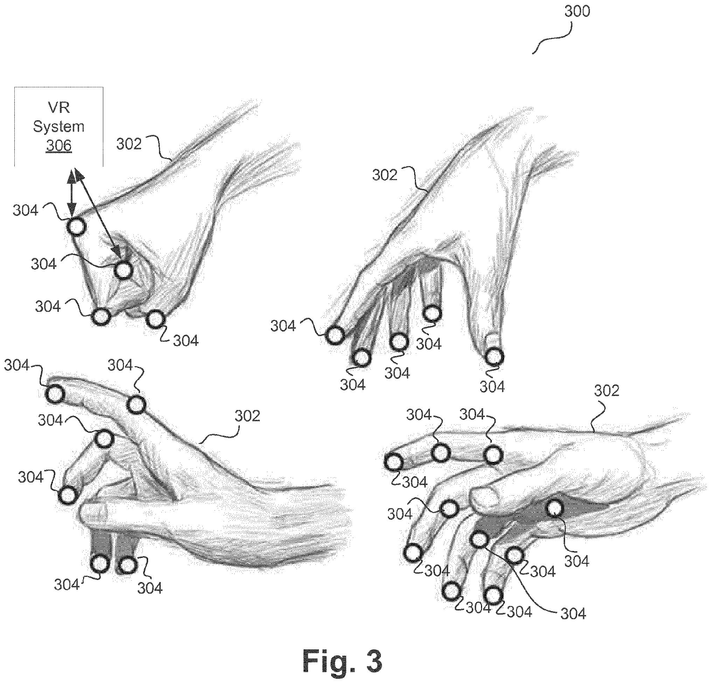

Fig. 3 is another example of a system 300 in which multiple input points 304 are implemented at various locations on a glove 302 and communicate with a VR system 306. Accordingly, a user wearing glove 302 may configure input points 304 to track various locations on their hands/fingers and, in some examples, present haptic feedback at those locations. Input points 304 may be attached to glove 302 by, for example, Velcro or small straps, or may be placed within pockets on glove 302. In one embodiment, glove 302 may be implemented as disjoint finger cots. In one embodiment, input points 304 in system 300 may be user configurable and may provide any other functionality described herein with reference to input points 202 in system 200 of Fig. 2, or may be a sensor, such as sensor 30 of Fig. 1.

In some embodiments, input points 304 and glove 302 may be configured such that locations of a user's fingers can be tracked while also allowing the user's fingers to be exposed for haptic interactions. For example, glove 302 can be a fingerless glove or a glove where fingertips for a user are exposed. In some embodiments, input points 304 can be located near the base of a finger of glove 302 or halfway up a finger of glove 302 so that the locations of the user's fingers can be tracked while also allowing for haptic interactions. When inputs points 304 (e.g., sensors) are located along only portions of a finger of glove 302 (e.g., not at the fingertips), the position of fingers can tracked and displayed in a virtual world by extrapolating location data from the available data received from the implemented input points. With regard to virtual world interactions, a virtual reality "rig" and extrapolation techniques such as inverse kinematics can be used to display portions of a user's body, such as a hand or fingers. In some embodiments, input points 304 can be located proximate to the fingertips of a user, but may be attached to a strap (e.g., Velcro) and positioned at the back of the finger to allow for rich haptic interactions. A glove similar to "GloveOne" from NeuroDigital can be modified to provide the various described configurations for system 300.

Referring back to Fig. 2, input points 202 can be network connected devices, and each network connected device 202 can communicate with a VR system 206 and may be used as a separate input device in a VR/AR/MR environment such as a VR game, thereby providing multimodal interaction. Examples of such inputs points 202 are smartphones, network connected wearables (e.g., a smartwatch, a helmet, clothes, or shoes), and the like. In some embodiments, each input point 202 may further include an actuator and may therefore be capable of presenting haptic feedback.

VR system 206 in combination with input points 202 can implement a virtual world for user 204 such that the user experiences a VR representation that includes a virtual representation of himself/herself in a virtual world (e.g., the virtual user). For example, one of input points 202 can be a headset which displays a virtual world to user 204, including a virtual user that perceives the virtual world based on the POV of user 204. Input points 202 can also be controllers, gloves, wearable, sensors, or other VR devices that allow user 204 to interact with the virtual world using the virtual representation of the user (i.e., virtual user).

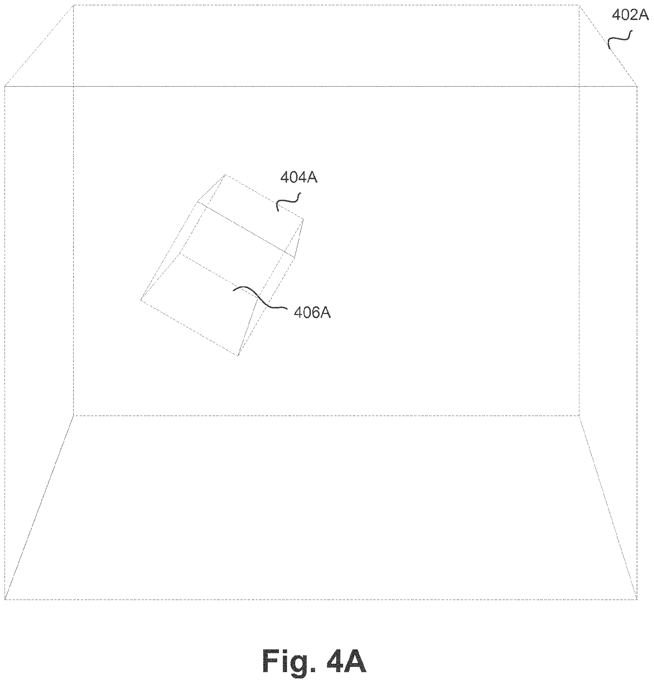

Figs 4A-4C depict diagrams of a virtual world with a virtual object and a corresponding real-world with a real-world object in accordance with various embodiments. Fig. 4A depicts virtual world 402A with virtual object 404A. For example, a user, such as user 204 of Fig. 2, can perceive virtual world 402A from the POV of the user. In addition, user 204 can, in some implementations, perceive a virtual user in virtual world 402A that represents the user (e.g., view a virtual body or avatar of himself or herself in virtual world 402A). Virtual world 402A includes a virtual object 404A in the view of the virtual user.

For example, virtual object 404A can be any suitable object in a virtual world, such as elements of a virtual environment (e.g., a tree, a rock, a building, a table, a chair, and the like) a moving virtual object (e.g., an animal, a robot, a virtual person, another virtual user, an avatar, and the like), and any other suitable virtual object. When user 204 looks left or right, the view of virtual world 402A rotates accordingly, and virtual object 404A may no longer be in view, or in some instances when the virtual object 404A can move, the virtual object may move back into view.

Virtual object 404A can have a surface 406A that includes a haptic profile. For example, where virtual object 404A is a virtual dog, surface 406A has a haptic profile that corresponds to the tactile feel of a dog (e.g., the tactile feel of dog fur). In some embodiments, the set of virtual objects that are rendered in virtual world 402A can each be associated with a haptic profile. In some examples, different portions (e.g., surfaces) of a virtual object can be associated with different haptic profiles (e.g., the fur of a dog and cloth of a scarf or other article of clothing worn by the dog).

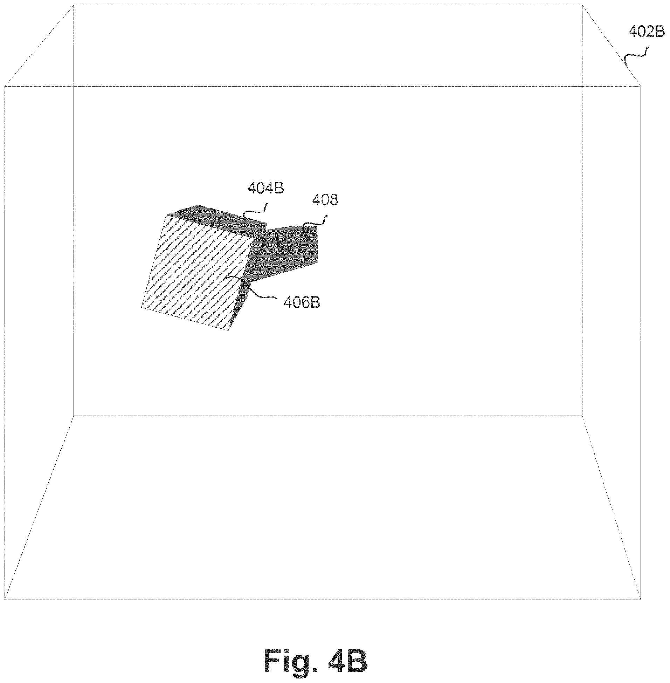

Fig. 4B depicts real-world 402B with real-world object 404B. For example, a user, such as user 204 of Fig. 2, can perceive virtual world 402A while being located in real-world 402B. In some embodiments, real-world 402B can represent a predetermined space in the real-world with predetermined dimensions. For example, real-world 402 can be a predetermined space in which user 204 can be located when using VR system 206 to perceive virtual world 402B. In some embodiments, VR system 206 can implement room scale functionality, such that real-world 402B can be a tracked real-world space used to direct user 204 within the predetermined space while the virtual user explores virtual world 402B.

In some embodiments, based on a tracking of the virtual user in virtual world 402A and the proximity of virtual object 404A, real-world object 404B can be provided at a location relative to user 204 such that the user can reach out and feel the real-world object while the virtual user reaches out towards virtual object 404A. As the virtual user moves about virtual world 402A, the virtual user's location can be tracked. Similarly, a location for virtual object 404A can be known or, in cases where the object moves, can be tracked. When the virtual user's location is proximate to virtual object 404A's location, real-world object 404B can be provided proximate to user 204.

In some embodiments, real-world object 404B can include a surface 406B, where the haptic properties of surface 406B can correspond to the haptic profile for surface 406A of virtual object 404A. For example, the haptic profile for surface 406A can be that of a virtual dog, and surface 406B can have corresponding haptic properties that result in the tactile feel of a dog. These haptic properties can include a soft and fine texture that resembles dog fur and a warm temperature that resembles an animal. Other virtual objects 404A can include other surfaces 406A with other haptic profiles, and surface 406B can have other corresponding haptic properties. In some embodiments, real-world object 404B can be a haptic swatch that is capable of exposing a plurality of surfaces with differing haptic properties to user 204.

In some embodiments, a haptic profile database can store associations between haptic profiles and real-world haptic properties that correspond to the haptic profile. For example, virtual world 402A can be associated with an application or environment, such as a VR game. The VR game can include a plurality of predetermined virtual objects that possess surfaces with a plurality of predetermined haptic profiles. A database can associate real-world haptic properties with the plurality of predetermined haptic profiles. For example, a set of ten haptic profiles can include a first haptic profile characterizing a smooth, hard, and metallic surface and a second haptic profile characterizing a textured, soft, and plush surface.

The database can store an association between the first haptic profile and the real-world haptic properties "smooth", "hard", and "metallic", and an association between the second haptic profile and the real-world haptic properties "textured," "soft," and "plush". When providing real-world object 404B that corresponds to the first haptic profile, a haptic swatch can be used that includes a surface with the haptic properties smooth, hard, and metallic. Here, because the database stores associations between haptic profiles and real-world haptic properties rather than real-world objects or surfaces, any object or surface that is smooth, hard, and metallic can be used. In some embodiments, the haptic swatch can also include a surface that is textured, soft, and plush. Thus, a given haptic swatch can be used to provide surfaces with different haptic properties that correspond to a plurality of haptic profiles from among a set of predetermined haptic profiles.

In some embodiments, a first real-world surface can be selected for a given haptic profile from among a set of real-world surfaces (e.g., of a haptic swatch) that include haptic properties. For example, the first real-world surface can be selected for the haptic profile based on a correspondence between a plurality of haptic properties of the first real-world surface and the haptic profile. In some embodiments, the haptic properties of the set of predetermined real-world surfaces can be compared to haptic properties associated with the haptic profile (e.g., accessible from the database of associations) to determine a similarity, where the first real-world surface is selected for the haptic profile based on a similarity between the haptic properties of the first real-world surface and the associated haptic properties of the haptic profile. For example, the similarity between the first real-world surface and the haptic profile can be a number of matches between the haptic properties associated with the haptic profile and the haptic properties of the first real-world surface.

For example, a haptic swatch can include three surfaces, each with differing haptic properties. A first surface can be soft, furry, and spongy, a second surface can be soft, velvety, and plush, and a third surface can be hard, metallic, and smooth. In this example, a virtual profile can be identified for a virtual object that is a lounge chair. The identified virtual profile can include haptic property associations (e.g., stored in a database) such as soft, polyester, and plush. The haptic properties of the three haptic surfaces can be compared to the haptic property associations of the identified virtual profile to determine that the first surface has one matching property, the second surface has two matching properties, and the third surface has no matching properties. In an embodiment, the similarity between each surface and the profile is based on the number of matching properties. Thus, it can be determined that the second surface is most similar to the identified profile, and thus the second surface can be selected. In some embodiments, provided real-world object 404B (e.g., a haptic swatch) can include the selected surface.

In some embodiments, an associated haptic property for a haptic profile can be weighted or mandatory in order for a surface to match the haptic profile. For example, soft in the above profile can be weighted or declared mandatory for a match, and thus a surface that is selected for the haptic profile also may be required to be soft. In some embodiments, the haptic properties for a surface and the associated haptic properties for a profile can identify similar properties but may recite different language. For example, a surface that is silky also can be considered soft. When comparing haptic properties, a dictionary of synonyms and/or a hierarchy of descriptors (e.g., which indicates that silky as a child of parent soft) can be accessed to determine the similarities.

In some embodiments, haptic swatches or the surfaces for one or more haptic swatches can be selected based on a predetermined set of haptic profiles for virtual world 402A. For example, where a set of ten haptic profiles are predetermined, a haptic swatch that includes surfaces with haptic properties that correspond to the ten haptic profiles can be selected or, for a given haptic swatch, surfaces with haptic properties that correspond to the ten haptic profiles can be selected.

In some embodiments, the number of different haptic profiles in a predetermined set can be greater than the number of different corresponding real-world surfaces. For example, a real-world surface can correspond to two different haptic profiles, and thus a single real-world surface can be provided for haptic interactions with virtual objects that correspond to different haptic profiles. In this example, a number of predetermined haptic profiles in a set for a given virtual world can be greater than the number of surfaces with haptic properties that correspond to the set of haptic profiles. A potential limitation to a VR system that presents rich haptic interactions is that a given haptic swatch may include a limited number of real-world surfaces. Thus, when a given surface for a given swatch can correspond to multiple haptic profiles, the swatch can present rich haptic interactions for a greater diversity of virtual world objects.

In some embodiments, a set of virtual objects from among a plurality of virtual objects in the virtual reality environment can be identified that have haptic profiles and associated haptic properties that match at least one of the set of predetermined real-world surfaces. For example, based on the described similarity match, haptic profiles for a set of objects within the virtual reality environment can each be compared to the haptic properties for surfaces of a haptic swatch. In some embodiments, a subset of virtual objects will have a haptic profile that matches one of the surfaces, and those virtual objects can be identified as objects where haptic interactions with a virtual user are available. For example, the virtual objects can be displayed with an indicator (e.g., can be glowing, can be proximate to a colored sign, and the like) that indicates the availability of haptic interactions.

In some embodiments, the haptic profile can further include a media property (e.g., audio and/or video). For example, one or more virtual objects may be associated with audio and/or video. In another example, the physical swatches themselves can be provided in conjunction with the rendering of one or more media objects using speakers and/or one more displays (e.g, a HMD). Here, the speakers can be integrated with or otherwise provided with the swatches or, alternatively the speakers can be provided elsewhere (e.g., attached to the HMD). In the various configurations, the media property can be used to enhance the perceived haptic interactions.

In some embodiments, when providing real-world object 404B, a relative virtual location between the virtual user and virtual object 404A can correspond to a relative real-world location between user 204 and real-world object 404B. In other words, a relative location for virtual object 404A relative to the virtual user can correspond to a relative location for real-world object 404B relative to user 204. For example, a distance tracked between the virtual user and virtual object 404A can be proportional to a distance between user 204 and real-world object 404B, for instance, based on the provided location of real-world object 404B. VR system 206 can track the movements of user 204 using any suitable tracking techniques known to one of ordinary skill in the art, such as using input points 202, additional sensors or sets of sensors, and the like. Based on the tracking of user 204, the location of the corresponding virtual user in virtual world 402A can be tracked. Virtual object 404A can be stationary or can be tracked by VR system 206, for instance based on a predetermined motion within a game or application, or based on a tracking for another virtual user (e.g., another user in virtual world 202A that is tracked similar to user 204). Using the tracked locations, a relative virtual location for virtual object 404A relative to the virtual user can be determined, and real-world object 404B can be provided in a location relative to user 204 that is based on the relative virtual location.

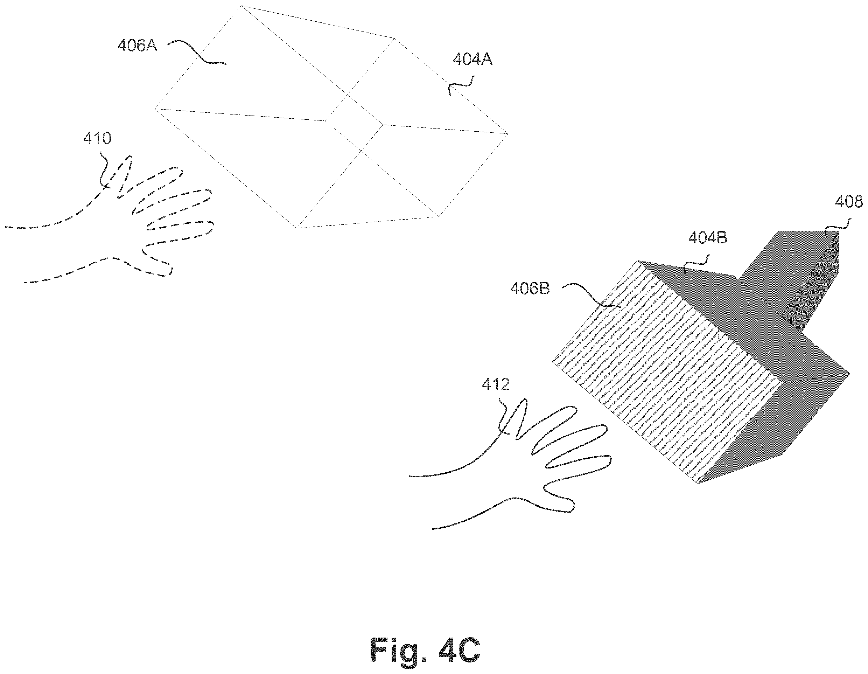

In some embodiments, relative virtual locations for virtual object 404A relative to an appendage of the virtual user (e.g., hand, finger, and the like) can correspond to relative real-world locations for real-world object 404B relative to an appendage of user 204. Fig. 4C illustrates a diagram of a virtual world with a virtual object and a corresponding real-world with a real-world object in accordance with various embodiments. Virtual appendage 410 of a virtual user has a relative virtual location to virtual object 404A and virtual surface 406A. Similarly, real-world object 404B can be provided in a location such that the relative real-world location of real-world object 404B (and real-world surface 406B) relative to real-world appendage 412 (e.g., of user 204) corresponds to the relative virtual location. In some embodiments, a glove or wearable can be used to track virtual and real-world locations for appendages (e.g., hands or fingers) of user 204, and a location for real-world object 404B can be provided relative to the tracked appendages, as described with reference to Fig. 3.

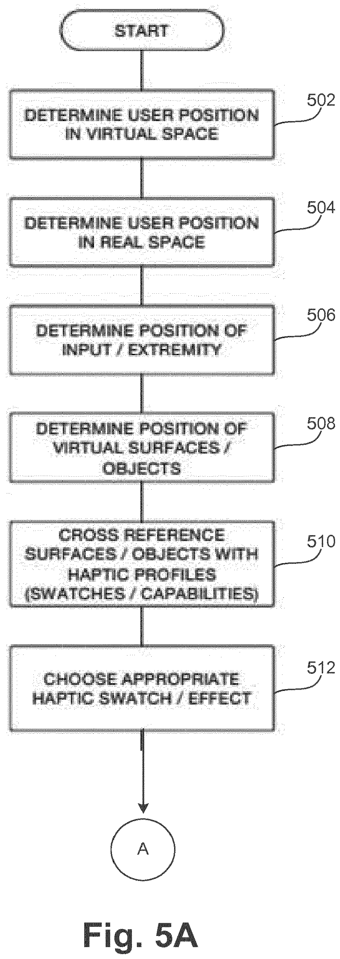

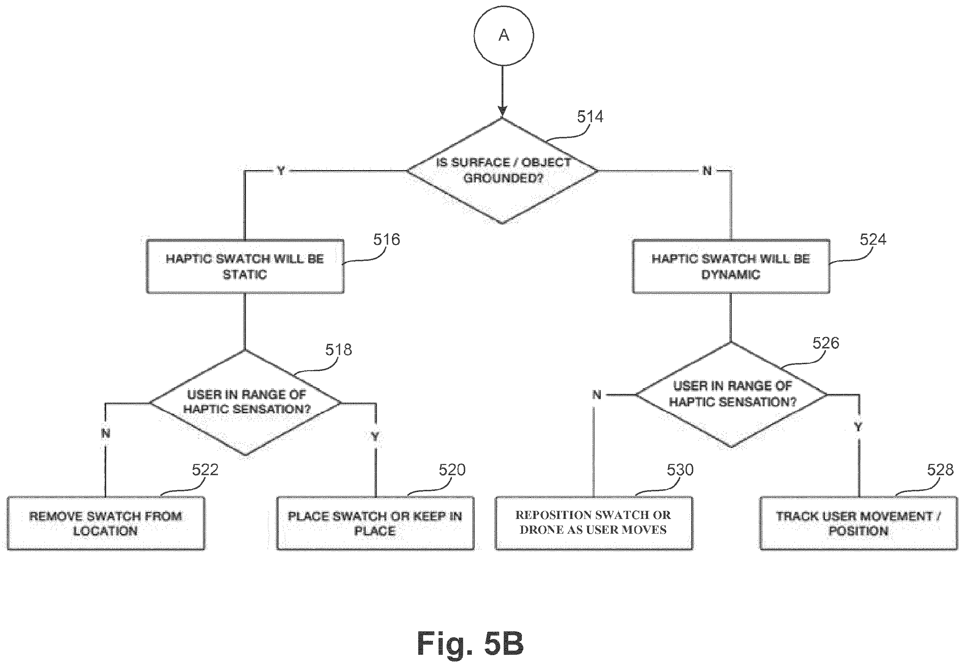

In some embodiments, apparatus 408 can provide real-world object 404B at the location relative to user 204 (or relative to an appendage of the user). For example, apparatus 408 can be a robotic assembly that can move an object, such as a haptic swatch, to various locations within real-world 402B. In another example, apparatus 408 can be a drone for moving such an object to various locations within real-world 402B. The function of apparatus 408 will be further detailed with reference to Figs. 5-10, below.

In some embodiments, apparatus 408 can move real-world object 404B along with movements of user 204. For example, when room-scale functionality is implemented by VR system 206, user 204 may move about real-world 402B. In some embodiments, as user 204 moves, apparatus 408 relocates real-world object 404B to maintain the relative positioning (e.g., the corresponds to the virtual relative location). For example, apparatus 408 may move real-world object 404B at the same pace as user 204 to allow the user to feel the object indefinitely.

Figs. 5A-5B are flow diagrams for presenting rich haptic interactions based on a virtual world according to various embodiments. In some embodiments, the functionality of diagrams of Fig. 5A, 5B, and Figs. 7-10, below, are implemented by software stored in memory or other computer readable or tangible medium, and executed by a processor. In other embodiments, the functionality may be performed by hardware (e.g., through the use of an application specific integrated circuit ("ASIC"), a programmable gate array ("PGA"), a field programmable gate array ("FPGA"), etc.), or any combination of hardware and software.

At 502, a location or position of a virtual user in a virtual space is determined. For example, a location or position of a virtual user that represents user 204 of Fig. 2 can be determined in virtual world 402A. The virtual location can be determined based on tracking movements of user 204 using, for example, input points 202 or other sensors. At 504 a location of user 204 in a real space, such as real-world 402B, is determined. Similar to the virtual location, the real-world location can be determined based on tracking movements of user 204 using, for example, input points 202 or other sensors.

At 506, a location or position of an input or extremity of user 204 is determined. For example, an appendage of user 204 (e.g., hand, finger, and the like) can be tracked such that a location or position of the real-world appendage 412 and the virtual world appendage 410 can be determined.

At 508, a location or position of virtual objects and/or virtual surfaces are determined. For example, virtual world 402A can be part of a VR application, such as a VR game, that includes one or more virtual objects 404A, and one or more virtual surfaces 406A. The location or position of the virtual objects and associated virtual surfaces can be tracked, for instance based on events that occur in the VR game.

At 510, the virtual objects and/or surfaces can be cross-referenced with haptic profiles and corresponding haptic properties of real-world objects or surfaces, such as a haptic swatch. For example, haptic profiles for one or more virtual objects, such as virtual object 404A, can be determined within virtual world 402A. Associations between haptic profiles and virtual surfaces of virtual objects, such as virtual surface 406A of virtual object 404A, can be predetermined. In some embodiments, the haptic profiles for virtual surfaces within virtual world 402A can determined, for instances based on the virtual user's location or position in virtual world 402A, and cross-referenced with the haptic properties for real-world objects.

For example, real-world 402B can include one or more real-world objects 404B, such as a haptic swatch, and one or more real-world surfaces 406B. In some embodiments, virtual world objects or surfaces can be associated with a haptic profile, and associations between the haptic profile and haptic properties for real-world objects or surfaces can be stored.

At 512, based on the virtual object, haptic profile, and associated haptic properties, real-world objects or surfaces can be selected that corresponds to the haptic profiles for the virtual objects. For example, real-world object 404B or real-world surface 406B that corresponds to a haptic profile of virtual object 404A or virtual surface 406A can be selected. In some embodiments, the correspondence between real-world object 404B (and real-world surface 406B) and virtual object 404A (and virtual surface 406A) can be predetermined, such as prior to run-time of the VR session.

At 514, it is determined whether each of the virtual objects or surfaces are grounded. For example, virtual object 404A may correspond to a moving object, such as an animal, or a non-moving object that is grounded, such as a building. When it is determined that virtual object 404A is grounded, the flow moves to 516. When it is determined that virtual object 404A is not grounded, the flow moves to 524.

At 516, for a given real-world object, it is determined that real-world object 404B provided to simulate virtual object 404A will be grounded. In some examples, real-world object 404B can be a haptic swatch. At 518, it is determined whether the virtual user or virtual appendage 410 is proximate to virtual object 404A such that a rich haptic interaction is in range. For example, it can be determined that virtual object 404A and/or virtual surface 406A are proximate to the virtual user or virtual appendage 410 (e.g., based on the tracked locations of each), such as when the virtual distance between virtual object 404A and virtual appendage 410 is less than or equal to a threshold distance. When it is determined that the virtual user or virtual appendage 410 is proximate to virtual object 404A, the flow moves to 520. When it is determined that the virtual user or virtual appendage 410 is not proximate to virtual object 404A, the flow moves to 522.

At 520, a static object with the selected real-world surface is provided relative to user 204 or is kept in place. For example, real-world object 404B can be a static or grounded haptic swatch that includes real-world surface 406B that corresponds the selected surface for virtual object 404A and/or virtual surface 406A. Apparatus 408 can provide real-world object 404B and real-world surface 406B at a location relative to user 204. For example, apparatus 408 can be a robotic assembly that moves real-world object 404B to the location relative to user 204 and positions the object so that real-world surface 406B is exposed to user 204 for rich haptic interactions.

In some embodiments, an angle for real-world object 404B relative to user 204 (and/or real-world appendage 412) can be determined based on an angle for virtual object 404A relative to the virtual user (and/or virtual appendage 410), for instance based on tracked locations of each. Apparatus 408 can position real-world object 404B at the determined angle so, when the virtual user reaches out to touch virtual object 404A, user 204 reaches out real-world appendage 412 and touches real-world object 404B at the expected angle.

At 522, real-world object 404B is removed from the location proximate to user 204, or real-world object 404B is not provided at a location proximate to user 204. Since virtual object 404A is not proximate to the virtual user, real-world object 404B is not needed for rich haptic interactions. At 520 and 522, the decision at 518 is re-determined at a predetermined interval or based on an event (e.g., in the VR game) to determine whether real-world object 404B is to be positioned, moved, or removed.

At 524, for a given real-world object, it is determined that real-world object 404B provided to simulate virtual object 404A will be dynamic (e.g., not grounded). In some examples, real-world object 404B can be a haptic swatch with moveable and/or dynamic capabilities.

At 526, it is determined whether the virtual user or virtual appendage 410 is proximate to virtual object 404A such that a rich haptic interaction is in range. For example, it can be determined that virtual object 404A and/or virtual surface 406A are proximate to the virtual user or virtual appendage 410 (e.g., based on the tracked locations of each), such as when the virtual distance between virtual object 404A and virtual appendage 410 is less than or equal to a threshold distance. When it is determined that the virtual user or virtual appendage 410 is proximate to virtual object 404A, the flow moves on to 528. When it is determined that the virtual user or virtual appendage 410 is not proximate to virtual object 404A, the flow moves on to 530.

At 528, a real-world object 404B with real-world surface 406B is provided relative to a tracked location of user 204, where the real-world object corresponds to a virtual object 404A that is dynamic. Dynamic virtual objects can move about virtual world 402A, and thus real-world object 404B also moves to present rich haptic interactions when the virtual user interacts with the dynamic virtual object.

In some embodiments, apparatus 408 can be configured to move real-world object 404B to simulate the movements of virtual object 404A relative to the virtual user. For example, movements of the virtual user (or virtual appendage 410) and virtual object 404A can be tracked to determine a dynamic relative location. Apparatus 408 can provide real-world object 404B in a location relative to real-world appendage 412 that simulates the dynamic relative location. For example, the providing can include continuously moving and/or rotating real-world object 404B such that the location and angle of the object relative to real-world appendage 412 simulates the dynamic relative location. Apparatus 408 can be a robotic assembly, drone, or any other suitable device for moving and/or continuously moving real-world object 404B.

At 530, real-world object 404B is repositioned, for instance based on tracked movements of the virtual user or virtual object 404A. When virtual object 404A is not proximate to the virtual user, real-world object 404B can be repositioned away from user 204 because the object is not needed for rich haptic interactions. In another example, virtual object 404A may move back and forth, for instance towards and away from the virtual user, and thus real-world object 404B can be kept near user 204 to present the user with rich haptic interactions when the proximity of virtual object 404A triggers such functionality.

In some embodiments, virtual object 404A can be positioned in virtual world 402A based on the relative location of real-world object 404B in real-world 402B. For example, real-world object 404B can be positioned on the left of user 204, and thus virtual object 404A will be positioned at the left of the virtual user representing user 204.

In some embodiments, real-world object 404B and/or real-world surface 406B can present dynamic haptic interactions for user 204. For example, real-world surface 406B can be an actuated surface that can include static haptic properties (e.g., texture) and also include dynamic haptic properties (e.g., actuation functionality, vibrotactile functionality, temperature regulation, deformability, and the like). In some embodiments, such dynamic haptic properties can be part of the haptic properties of a real-world object, and these dynamic haptic properties can be associated with haptic profiles for one or more virtual objects. Dynamic haptic effects, such as deformation, temperature changes, actuation, and the like, can be rendered by real-world object 404B in synchronization with corresponding effects in a VR game (e.g., corresponding actions of/changes to virtual object 404A). In some embodiments, apparatus 408 can emit other haptic substances, such as water droplets, mist/humidity, hot or cold air, or wind to simulate certain conditions for/experiences of the virtual user.

In some embodiments, a motion of real-world object 404B or a force applied by real-world object 404B (e.g., applied on user 204 or an appendage of user 204) can be used to simulate the stiffness of virtual object 404A. For example, apparatus 408 can move real-world object 404B or can apply resistance force against a force applied by user 204 upon real-world object 404B. In some embodiments, the movement or resistance force effected by apparatus 408 can be triggered by a determination that the virtual distance between virtual object 404A and the virtual user representing user 204 is less than or equal to a threshold distance. For example, when the virtual distance between virtual object 404A and the virtual user is less than or equal to a threshold, it can indicate that the virtual user intends to interact with (e.g., touch) virtual object 404A, and thus real-world object 404B can be moved by apparatus 408 to simulate the interaction between the virtual user and virtual object 404A.

In some embodiments, to simulate a deformable object, such as the sail of a sailboat, apparatus 408 can provide a real-world object 404B that has a stiff surface that is not deformable, and apparatus 408 can move real-world object 404B backwards, thereby creating the illusion that real-world object 404B is deformable. In other words, movement of real-world object 404B backwards causes the object to feel more deformable or flexible than it is. In another example, to simulate a stiff object, apparatus 408 can provide a real-world object 404B that has flexibility, and apparatus 408 can move real-world object 404B toward user 204, thereby creating the illusion that real-world object 404B is stiffer or harder than it is. In this embodiment, the movement of real-world object 404B simulates stiffness, which is a static haptic property of virtual object 404A.

In some embodiments, real-world object 404B and/or apparatus 408 can be used to detect force from user 204 or real-world appendage 412. For example, sensors in real-world object 404B and/or apparatus 408 can be used to detect force feedback. In some embodiments, the force feedback may cause corresponding responses in a VR game, such as reactions from a virtual object 404A. In some embodiments, apparatus 408 can also be used to apply force to user 204 and/or real-world appendage 412, for instance based on corresponding actions in a VR game.

In some embodiments, apparatus 408 can have mounted motion tracking devices (e.g., emitters and/or sensors) to implement room-scale functionality for VR system 206. Accordingly, apparatus 408 can continuously track user 204 (e.g. through a building, or a similar open space) so the user's movements and gestures can be tracked.

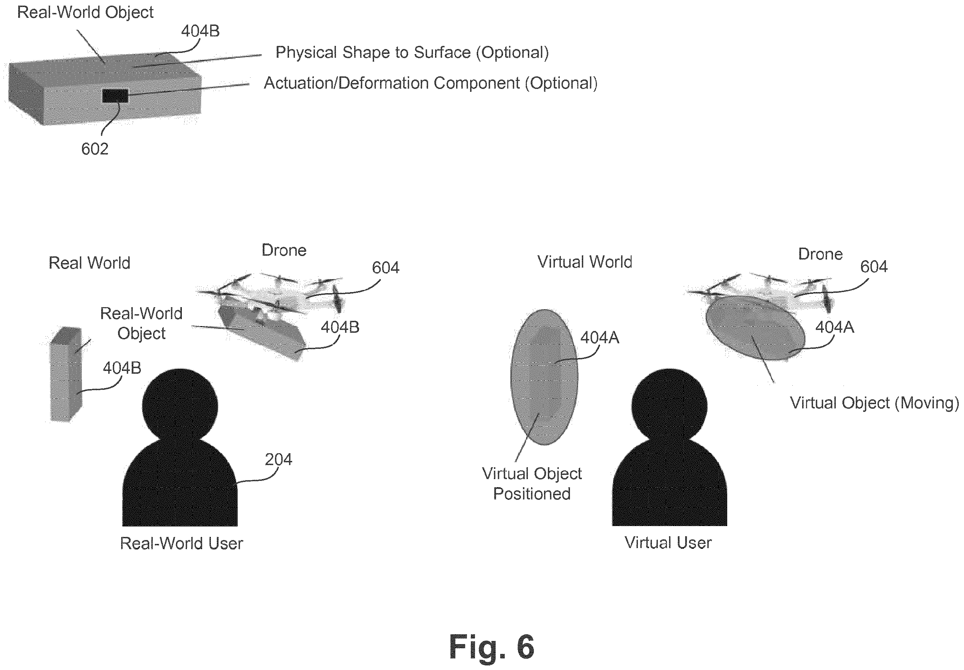

Fig. 6 illustrates an example drone equipped system for presenting rich haptic interactions according to various embodiments. Fig. 6 depicts real-world object 404B that includes a physical shape for presenting haptic interactions as well as actuation/deformation component 604, which can be used to change the shape of real-world object 404B. Actuation/deformation component 604 can present additional haptic interactions, such as object movement, when a user is interacting with real-world object 404B, for instance using real-world appendage 412.

As described with reference to Fig. 5, based on tracked locations, real-world object 404B can be provided in a real-world location relative to user 204 that corresponds to a virtual relative location for virtual object 404A relative to a virtual user. Fig. 6 depicts drone 604 moving real-world object 404B to a relative real-world location that corresponds to the virtual world location relative to virtual world object 404A. Drone 604 can be any suitable drone known to one of ordinary skill in the art that can be used to move objects with haptic interaction surfaces, such as a tricopter, quadcopter, hexcopter, octcopter, short range, close range, very close range, small, medium large, any suitable delivery drone, and the like.

In some embodiments, a plurality of drones can be used to present rich haptic interactions to user 204. For example, a virtual user may be in a hallway, and thus real-world objects can be positioned by multiple drones on each side of user 204 to represent the walls of the hallway. In another example, a haptic effect may be experienced by user 204 over a duration of time, and a plurality of drones may be implemented to achieve the effect over the duration. One of these haptic effects can include the feeling of walking through a web like material, where a plurality of drones hold a web like real-world material in the path of user 204 as the user moves.

In some embodiments, haptic effects can be presented to one or more fingers of user 204. For example, rather than providing a deformable or dynamic real-world object to simulate a dynamic haptic effect, a plurality of drones can present coordinated haptic effects to one or more fingers of user 204.

In some embodiments, a configuration for a given haptic effect can be determined. For example, a number of drones to be used to achieve the given haptic effect and/or material or objects used to achieve the given haptic effect can be determined. In some embodiments, the techniques described in Fig. 5A can be used to select a real-world haptic effect for user 204 that simulates a virtual interaction for the virtual user the represents user 204, and a configuration for the selected haptic effect can be determined.

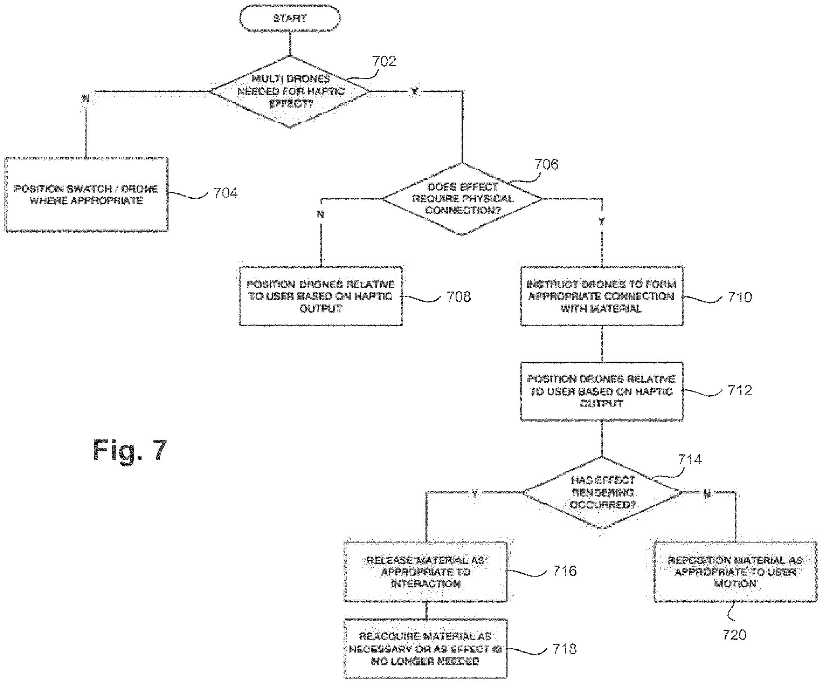

Fig. 7 is a flow diagram for presenting rich haptic interactions based on a virtual world using a drone according to various embodiments. For example, the flow diagram of Fig. 7 can be used to determine a configuration for a selected haptic effect. At 702, it is determined whether the haptic effect is to be achieved by a single drone or multiple drones. For example, a simple haptic effect, such as simulating the presence of wall, can be achievable by a single drone. However, a complex haptic effect, such as simulating the movements of a creature with multiple arms that the virtual user can touch, may require multiple drones. In some embodiments, it may be determined that a single drone can achieve the haptic effect when a virtual object's movements can be simulated by a single drone and it may be determined that multiple drones are needed to achieve the haptic effect when a virtual object's movements require multiple drones to simulate the movements.

In some embodiments, it may be determined that multiples drones are needed to achieve a haptic effect that involves multiple steps at a given time, such as dropping and retrieving an object or material according to a timeline. When it is determined that a single drone can achieve the haptic effect, the flow moves to 704. When it is determined that multiple drones are required to achieve the haptic effect, the flow moves to 706.

At 704, the single drone (and any objects/materials carried by the drone) can be provided in a real-world location relative to user 204. For example, similar to the relative virtual location and relative real-world location described with reference to Figs. 5A-5B, the single drone can position real-world object 404B relative to user 204 to simulate virtual object 404A. In addition, and similar to the functionality described with reference to Figs. 5A-5B, the relative real-world location can be updated based on tracking, and thus real-world object 404B can be relocated by the drone or can be removed by the drone.

At 706, it is determined whether the haptic effect is achieved by the multiple drones using a physical connection with an object or material. For example, some haptic effects can be achieved using drones without any additional objects or materials. In some embodiments, a drone can be affixed with actuators or a surface that can be used to simulate a virtual interaction. For example, drones can be affixed with smooth surfaces to simulate a common virtual interaction, such as touching a wall or an object that is not textured.

In some embodiments, drones may use a material or object to achieve a given haptic effect. For example, a plurality of drones may place a web like material in the path of user 204 to simulate the virtual experience of walking through a virtual web. In other embodiments, an object, such as a haptic swatch, may be used to achieve a haptic effect. Based on the haptic effect to be performed, it can be determined whether an object or material is needed. When it is determined that the haptic effect can be achieved without an object or material, the flow moves to 708. When it is determined that the haptic effect is achieved using a physical connection with an object or material, the flow moves to 710.

At 708, the multiple drones can be positioned at real-world locations relative to user 204. For example, similar to the relative virtual location and relative real-world location described with reference to Figs. 5A-5B and 704, the drones can be positioned relative to user 204 to simulate an interaction with one or more virtual objects or to simulate any other interaction for the virtual user. In addition, and similar to the functionality described with reference to Figs. 5A-5B, the relative real-world locations can be updated based on tracking, and thus the drones can be relocated or can move away from user 204.

At 710, the multiple drones can be instructed to form appropriate connections with an object or material. For example, one or more drones can be instructed to carry a haptic swatch, a web like material, or any other relevant object or material. In some embodiments, multiple drones can be instructed carry a single object or material, such as a set of drones carrying each end of a strand of a web like material.

At 712, the multiple drones can be positioned at real-world locations relative to user 204 such that the connected materials or objects can present the intended haptic effect. For example, similar to the relative virtual location and relative real-world location described with reference to Figs. 5A-5B, 704, and 708, the drones can position the connected materials or objects relative to user 204 to simulate an interaction with one or more virtual objects or to simulate any other interaction for the virtual user. In some embodiments, a set of two drones can carry a web like material and position themselves on each side user 204 such that user 204 touches the web like material when virtual user representing user 204 touches a virtual web. In various examples, multiple sets of drones can be implemented to simulate multiple webs around user 204.

At 714, it is determined whether the haptic effect has been rendered. For example, it is determined whether one or more of the positioned drones and object/materials have rendered the intended haptic effect for user 204. In the above example, when the virtual user touches a virtual web and user 204 touches a corresponding web like material held by a set of drones, it can be determined that the haptic effect has been rendered. Such a determination can be made based on tracking of user 204, the drones and objects/materials, the virtual user, virtual objects, and any other suitable elements. When it is determined that the haptic effect has been rendered, the flow moves to 716. When it is determined that the haptic effect has not been rendered, the flow moves to 720.

At 716, material can be released to achieve the haptic interaction. For example, drones that are carrying a web like material can release the material when user 204 touches it, thus simulating the experience of a virtual user touching virtual webs. At 718, material can be reacquired by the drones. For example, the released web like material can be reacquired by the drones. In some embodiments, the reacquired material can be repositioned for additional haptic interactions, for instance to simulate additional virtual webs. In another example, the reacquired material can be removed when the haptic effect is no longer needed (e.g., the virtual user is no longer approximate to virtual webs, determined based on tracking).

At 720, the material can be repositioned based on tracked movements. For example, user 204, the drones and objects/materials, the virtual user, virtual objects, and any other suitable elements can be tracked by the VR system. Based on the track the drones and materials/objects can be repositioned such that their relative location to user 204 simulates the appropriate virtual interaction of the virtual user. Thus, configurations for a haptic effect can be determined and executed using one or multiple drones.

In some embodiments, a robotic assembly (e.g., apparatus 408) can be used to achieve a haptic effect that is similar to some haptic effects achieved by drones. For example, the robotic assembly can include multiple platforms, arms, grasping members, or any other suitable components. In some embodiments, a virtual user representing user 204 can walk along a corridor that includes virtual spider webs or cobwebs, for example based on VR system redirecting user 204/the virtual user (e.g. a VR system that implements room-scale). To simulate the virtual user's interactions with the virtual webs, the robotic assembly can include multiple arms or platforms that hold web like material proximate to user 204. In some embodiments, multiple web like materials can be positioned proximate to user 204. As the virtual user touches a virtual web, the robotics assembly can release the web like material to simulate the virtual experience. In some embodiments, the web like material can include actuators to simulate spiders crawling on the material. The released material can be tracked by the robotic assembly and reacquired, for example after falling to the ground. The web like material can then be repositioned proximate to user 204 for additional haptic effects or can be removed.

In some embodiments, a plurality of small drones, or insect drones, can be used to present haptic interactions to user 204. For example, locations for user 204's fingers can be tracked, for instance using wearable sensors, and insect drones may be used to present haptic interactions to one or more of the fingers. In some implementations, the insect drones can have a home station near user 204, such as in or attached to a wearable or controller, such as one of input points 202 of Fig. 2. In some embodiments, a wearable or sensors can be used to track one or more fingers of user 204, and one or more drones can be positioned relative to the finger(s) based on the tracking. For example, VR system 206 can provide real-world positioning information relative to the tracked fingers of user 204 to a plurality of drones based on a virtual object's relative location to a virtual user, and can further provide updated positioning information based on the movements of the virtual user, the virtual object, and the movements of the fingers of user 204. In some embodiments, gesture detection techniques and/or software can be used to track the motion of the hands and fingers of user 204, including use of 3D motion detection cameras, ultrasonic motion detectors, passive infared sensors, and the like. Based on the detected gestures, the drones can be instructed to reposition themselves to present the relevant haptic interaction.

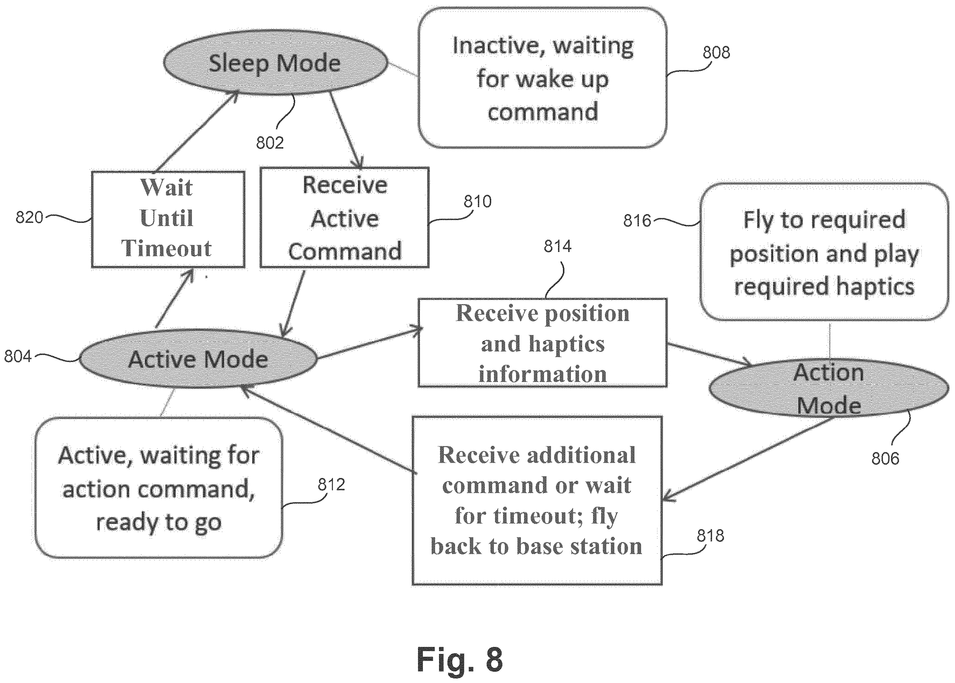

Fig. 8 is a state diagram for presenting rich haptic interactions based on a virtual world using a drone according to various embodiments. A drone that presents rich haptic interactions, such as drone 604 or a similar drone (e.g. insect drone), can have various states, such as sleep mode 802, active mode 804, and action mode 806.

For example, drone 604 or a similar drone can be in a sleep mode 802, where the drone can be inactive at a base station and can wait for an activation command at 808. In some embodiments, the base station can be a controller or wearable device, such as one of inputs points 202 of Fig. 2. For example, a bracelet, glove, or ring can be a base station for a plurality of small or insect drones. In some embodiments, the drones can be charged while in sleep mode at the base station. An activation command can be transmitted based on the virtual user's movements in virtual world 402A, for example if the virtual user enters an environment where rich haptic interactions are available. In some embodiments, the activation command can be triggered based on one or more gestures of user 204, such as hand gestures that indicate user 204 is expecting to interact with an object (e.g., user 204 moving an arm and raising a hand to touch an object). In some embodiments, the activation command can be triggered based on the actuation of a button, trigger, or joystick on one of inputs points 202. In some embodiments, the activation command can be triggered by an algorithm or detection software running at the base station once interaction between the virtual user and a virtual object (or an element of the virtual environment) is detected. For example, launching an VR/AR/MR application on a gaming console or other device can trigger the activation command. In some embodiments, a virtual user can experience a virtual world 402A with a virtual object 404A, where the virtual object can be associated with a haptic zone. For example, virtual object 404A can be defined by a geometry (e.g., three-dimensional shape) and the haptic zone can be an area surrounding and larger than the virtual object with a similar geometry (e.g., three-dimensional shape of the virtual object but larger, or a standard three-dimensional shape, such as a rectangle, cube, sphere, and the like). In some embodiments, the activation command can be triggered when it is detected that the virtual user (or an appendage of the virtual user) intersects with (or crosses into) the haptic zone associated with virtual object 404A.

At 810, drone 604 can receive an activation command and can enter active mode 804. For example, an initialization sequence that places the drone in standby for presenting rich haptic interactions to user 204 can be performed. At 812, drone 604 or a similar drone can be active and waiting for an action command, such as at the base station or proximate to real-world objects to be used to present user 204 with rich haptic interactions. VR system 206 can transmit the activation command to drone 604 or a similar drone.

At 814, drone 604 or a similar drone can receive position and haptics information, and can then proceed to action mode 806. For example, drone 604 or a similar drone can receive position information such that the drone is instructed to move to a real-world location relative to user 204 that corresponds to a relative virtual location that is tracked by VR system 206. Drone 604 or a similar drone can also receive haptics information, such as a real-world object (e.g. haptic swatch) to move to the received position or an action to perform, such as an actuation or series of actuations, at the position. At 816, drone 604 or a similar drone can fly to the received position to present the haptic effect indicated by the haptics information. For example, a haptic swatch with a surface comprising a haptic property can be provided for user 204 to reach out and touch or the instructed action (e.g., actuation effects) can be performed such that the user can feel the action. In some embodiments, drone 604 or a similar drone can receive updated position and haptics information, relocated to the updated position, and provide/generate the relevant haptic effect based on the updated information.

At 818, drone 604 or a similar drone can receive a command to return to active mode or can determine that a haptic interaction timer has expired. Based movements of the virtual user or virtual object 404A, drone 604 or a similar drone can be instructed to return to active mode. At active mode 804, drone 604 or a similar drone can wait for a sleep timer to expire, and at 820 can determine that the sleep timer has expired. After the sleep timer has expired, drone 604 or a similar drone can return to sleep mode 802, for example at a predetermined base station.

In an example implementation, small or insect drones can be equipped with one or more thin and small actuators, such as on their mouth, legs, wings, body, casing, back, or in any other suitable location. These drones can then fly to relevant locations and generate haptic effects for user 204. For example, a virtual user that represents user 204 can be located in a virtual world in which the virtual user dials virtual buttons (e.g., to make a phone call, or for any other suitable purpose). The insect drones or small drones can be instructed to fly to the fingers of user 204 and generate haptic effects for each corresponding finger when the virtual user presses a virtual button with one or more fingers. In some embodiments, when the virtual user presses harder on a given virtual button, the haptic effect generated by the small or insect drones can grow larger in intensity or the area of the finger(s) that experience the haptic sensation can be increased. In some embodiments, the small size of the insect or small drones can allow the drones to present haptics that simulate textures. For example, small actuators and actuation signals can be used to render texture haptic effects, as described in U.S. Patent Application No. 12/697,042, entitled "Systems and Methods for Using Multiple Actuators to Realize Textures", which is hereby incorporated by reference in its entirety. In some embodiments, the small or insect drones can carry or otherwise be equipped with one or more haptic surfaces and/or a haptic swatch. For example, the small or insect drones can provide the surface or haptic swatch such that user 204 can interact with the surface(s) or swatch. In some embodiments, a plurality of small or insects drones can be used in combination to create a larger surface area with which user 204 can interact.

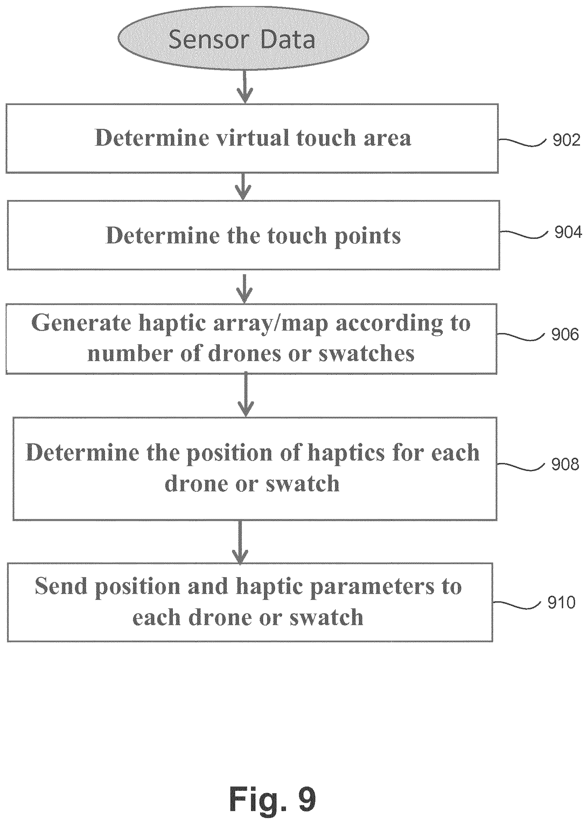

In some embodiments, these small or insect drones can flow from state to state according to the state diagram depicted in Fig. 8. In addition, the small or insect drones can receive instructions about locations and haptics to be generated from a controller that determines such information. For example, the controller can be a VR system, a smart device (e.g., a controller, smart wearable device, smartphone, and the like), a microcontroller, a personal computer, a server or cloud server, or any other suitable device. In some embodiments, the controller can receive sensor data, for example continuously over a time period, from one or more sensors used to track user 204 and/or one or more drones, and the controller can output position information and haptics for a plurality of drones. Fig. 9 illustrates an example flow diagram for positioning a plurality of drones to present rich haptic interactions according to various embodiments. For example, small or insect drones can receive position information according to the flow diagram of Fig. 9.

At 902, a virtual touch area map is determined. In some embodiments, the virtual touch area map can be based on a three-dimensional map of the virtual object. For example, the virtual object map can be based on the rendered shape of the virtual object in the virtual world (e.g., geometry of the virtual object). In addition, the virtual object map can include additional information about the virtual object, such as positioning in the virtual world, color, texture (e.g., friction), stiffness, resistance (e.g., resistance force, such as the force applied on a finger by a button when pressed), and other attributes of the virtual object. The information for the virtual object map can be stored in an array.

In some embodiments, a virtual touch area map can be determined based on the virtual object map and a positioning of the virtual user. For example, based on the relative location for the virtual user (e.g., relative location of a finger, multiple fingers, hand, or multiple hands), a virtual touch area can correspond to the surface or portion of the virtual object that the virtual user is interacting with (e.g., touching). In some embodiments, the virtual touch area includes interactions types, such as interactions that are single finger (e.g., pressing a button), multiple finger (e.g., typing on a keyboard), whole palm (e.g., holding an object), multiple hand, and the like.

In some embodiments, the virtual touch area map also includes the additional information about the virtual object, such as positioning in the virtual world, color, texture, stiffness, resistance, and other attributes of the virtual object. For example, a virtual touch area for a single finger interaction, such as pressing a button, can be determined based on the geometry of the button and the positioning of the button relative to the positioning of the virtual user or a finger of the virtual user. In addition, the virtual touch area map can include other attributes for the virtual button, such as, the color, texture, stiffness, resistance, and the like.

At 904, touch points for the rich haptic interaction can be determined based on the virtual object map and/or virtual touch area map, and the additional information about the virtual object. In some embodiments, touch points for a single finger interaction, such as pressing a virtual button, can be determined based on the geometry (three-dimensional shape) of the virtual button. For example, similar to a virtual boundary, touch points can be distributed around the geometry of the virtual button so that an interaction with the virtual button can be simulated by haptics assigned to the various touch points. In some embodiments, the geometry of the virtual object defined by the virtual touch area map can be used to determine the touch points.

In some embodiments, touch points can be determined based on the additional information about the virtual object, such as its texture, stiffness, or resistance. For example, the virtual button may be stiffer on the edges than the center, and thus a density of touch points can be higher at the edges of the virtual button than in the center. In another example, a virtual object that has a rough surface can correspond to a higher number of touch points than a virtual object that has a smooth surface, for example because a rough surface provides greater tactile sensation than a smooth surface.

In some embodiments, the determined touch points can be based on a resolution of a display presented to a real-world user. For example, user 204 can wear a VR headset (e.g., one of input points 202) that includes a display screen with a certain resolution (e.g., pixel density). A displayed geometry and/or appearance of a virtual object (e.g., texture) can be based on the implemented resolution, and thus the number of touch points can be related to the resolution. In some embodiments, the number of touch points is directly related to the pixel density for such a display.

At 906, a haptic array or haptic map can be generated. For example, the haptic array or map can indicate the determined touch points and the haptics for (that correspond to) those touch points. In some embodiments, the haptic array or map can indicate the quality and location of haptics to be generated to simulate the virtual user's interaction with the virtual object. For example, based on one or more (or a combination) of the available drones/actuators, determined touch points, virtual object map, virtual touch area map, and the additional information about the virtual object, the locations and a quality for haptics can be determined. In some embodiments, the haptic array or map can assign touch points to corresponding haptics, and can indicate the quality for those corresponding haptics.

In some embodiments, a quality for haptics that corresponds to one or more of the touch points can be determined to generate the haptic array or haptic map. For example, tens or hundreds of touch points (such as those that represent the haptics of a virtual button push) can correspond to low quality haptics, such as a simple feedback, while a higher number of touch points (such as those that represent a multiple finger or whole hand interaction) can correspond to higher quality haptics (e.g., a spectrum from a low degree to high degree or a haptic interaction that includes a combination of haptic effects, such as a pulsing haptic effect combined with other dynamic or static haptic effects).

In some embodiments, the quality of a haptic interaction can be determined based on a number of available drones and/or the number of available actuators (e.g., actuators per drone). For example, a number of touch points can correspond to a first quality of haptics, and a first number of drones/actuators can be available, where the first number of drones/actuators cannot achieve the first quality of haptics. In such a case, the quality of the haptic interaction can be reduced to a second quality that is achievable by the first number of drones/actuators.

In some embodiments, a quality of the haptics can depend on the type of actuators and the number of available actuators. For example, in some cases, high quality haptics can be generated using a limited number of actuators in multiple touch events based on the capabilities of the actuators. In some embodiments, haptic illusions or pseudo haptics can be used to achieve high quality haptics with a limited number of drones/actuators.

In some embodiments, a number of touch points can be achieved by a single actuator or drone. For example, for a single finger button push interaction, the number of determined touch points may be tens or a hundred, yet a single drone with a macro fiber composite (MFC) actuator can be used to simulate the interaction. In some embodiments, a location for the haptics to be generated can be based on the locations for the plurality of touch points that correspond to the haptics (e.g., the center or average of the locations). The quality for the haptics can be determined based on the characteristics of the various touch points, for example the average of the pressure values, the size of the touch area, or the texture of the virtual object. In another example, when the interaction is a hand holding a virtual object, the haptic array or map can assign haptics to each finger and the palm, and the quality of the haptics can be different based on the features of different touch points over the touch area.

Thus, the quality of haptics and the number of touch points that correspond to the haptics can be adjusted based on the quantity of drones/actuators available to present the haptics. For instance, the quality of the haptics used to simulate an interaction with a virtual object can be associated with a fidelity, similar to the fidelity of a video stream. As the number of available drones/actuators decreases, a higher number of touch points will be assigned to each actuator/drone and/or the quality of the haptics will be reduced. Thus, a lower number of actuators/drones can correspond to a lower fidelity haptic interaction, and vice versa. In some instances, the types of drones (e.g., number of supported actuators) and types of actuators can similarly affect the fidelity of the haptic interaction.

In some embodiments, rather than or in combination with actuators, the available drones can be equipped with or carry surfaces with haptic surfaces and/or a haptic swatch, as detailed herein. For example, based on one or more (or a combination) of the available drones/haptic surfaces, determined touch points, virtual object map, virtual touch area map, and the additional information about the virtual object, the locations and a quality for haptics can be determined. In some embodiments, the haptic array or map can assign touch points to haptic profiles, and drones can provide haptic surfaces that correspond to the haptic profiles at the locations of those touch points.

At 908, positions and haptics for each of a plurality of drones are determined. For example, based on the haptic array or map, positions and haptics for drones can be determined to simulate the virtual object at a determined real-world position. As previously described, user 204's movements (including finger movements, in some examples) are tracked, and the position for each drone relative to user 204 can be determined based on the tracking.

In some embodiments, an algorithm (e.g., running at a base station) can determine, based on the haptic array or map, position information for the drones, rotation for each drone, and the haptic parameters of haptics (e.g., quality of haptics and/or haptic profile) for each actuator and/or haptic surface of the drones. The position, rotation, and haptic parameters can be determined such that features of the virtual object corresponding to the virtual touch area map are simulated. In some embodiments, the haptic parameters for a given drone can be based on the quality of haptics for the drone or the haptic profile indicated by the haptic array or map. For example, an insect drone can have a plurality of actuators affixed to the drone (e.g., three, four, six, and the like), and haptic parameters for each of the actuators can be determined according to the haptic array or map. In another example, a small drone can be equipped with one or more haptic surfaces, such as a haptic swatch, that correspond to different haptic profiles. In some embodiments, the positioning information for drones/actuators can be based on the positioning indicated by the haptic array or map and the tracked position of user 204.

In some embodiments, user 204's movements can be tracked by one or more sensors (e.g., cameras, VR controllers/wearables, and the like) and the position information for a given drone can be updated at each frame (e.g., unit of time), for example based on instructions transmitted from a base station. In some examples, the drone can attach to a hand or a VR wearable device worn by the user 204, and thus the drone can move along with the movements of user 204.

At 910, the positions and haptic parameters for each of a plurality of drones is transmitted to the drones. For example, the determined position information and haptic parameters for haptics to be generated by each drone can be transmitted to each drone. In some embodiments, the plurality of drones can perform the state flow of Fig. 8, and thus the position and haptic effect information can be used by each drone in action mode 806.

In an example implementation, for a single finger virtual button push interaction, a drone can fly to a position indicated by received position information (e.g., the center of a group of touch points for the virtual button, as indicated in the haptic array or map) and generate a haptic effect using an MFC actuator according to received haptic parameters. The parameters of this generated haptic effect (e.g., determined based on haptic quality, as indicated by the haptic array or map) can be transmitted to the drone and used to simulate the haptic interaction with the virtual button. In another example, when the interaction is a hand holding a virtual object, positioning information can locate drones/actuators at each finger and the palm, and the haptic parameters can be different based on the features of different touch points over the touch area (e.g., as indicated in the haptic array or map). In yet another example, for a single finger virtual button push interaction, a drone can fly to a position indicated by received position information (e.g., the center of a group of touch points for the virtual button, as indicated in the haptic array or map) and provide a haptic surface for the interaction with user 204. The parameters of this generated haptic effect (e.g., haptic surface that correspond with a haptic profile for the effect) can be transmitted to the drone and used to simulate the haptic interaction with the virtual button.

In some embodiments, all or portions of the flow diagram of Fig. 9 can be performed to update the drones/haptic parameters based on movements or new circumstances for the virtual user. For example, a number of drones used to present the haptics can be reduced, such as where the number of touch points is reduced, the quality of the haptics is reduced, or the number of available drones/actuators is reduced. The update algorithm can be used to determine updated positions and haptic parameters for drones that relocate the drones to achieve minimized power consumption and cost.

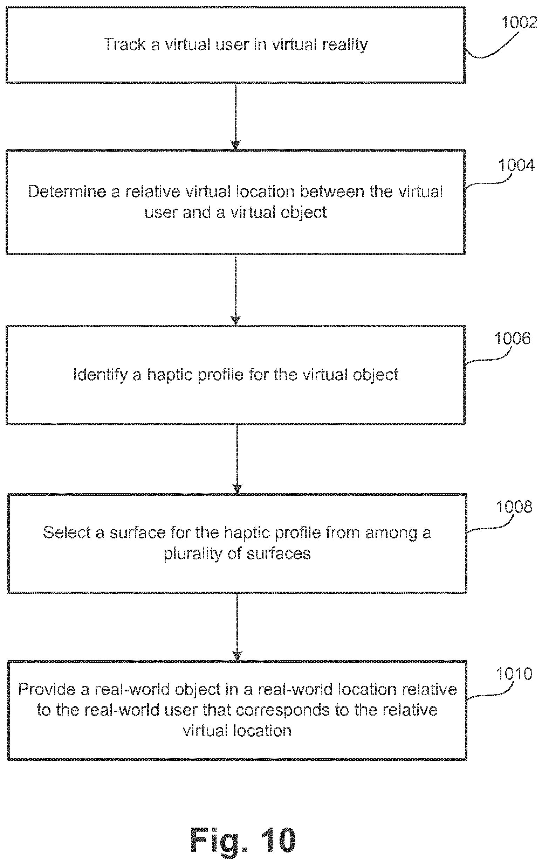

Fig. 10 is another flow diagram for presenting rich haptic interactions based on a virtual world according to various embodiments. At 1002 a virtual user in a virtual reality environment is tracked, where the virtual user is a virtual representation of a real-world user in a real-world environment. For example, user 204 can be immersed in virtual world 404A by VR system 206 and input points 202. User 204 can be physically located in real world 404B while the virtual user interacts with virtual world 402A. The movements of the virtual user/user 204 can be tracked, for instances using input points 202 on user 204.

At 1004 a relative virtual location for virtual object 404A relative to the virtual user can be determined, for instance based on the tracking of the virtual user and a tracking of virtual object 404A. At 1006 a haptic profile can be identified for virtual object 404A. For example, a haptic profile can be identified for surface 406A of virtual object 404A.

At 1008, a first real-world surface can be selected for the haptic profile from among a set of real-world surfaces (e.g., of a haptic swatch) that include haptic properties. For example, the first real-world surface can be selected for the haptic profile based on a correspondence between a plurality of haptic properties of the first real-world surface and the haptic profile. In some embodiments, the haptic properties of the set of predetermined real-world surfaces can be compared to haptic properties associated with the haptic profile (e.g., accessible from the database of associations) to determine a similarity, where the first real-world surface is selected for the haptic profile based on a similarity between the haptic properties of the first real-world surface and the associated haptic properties of the haptic profile. For example, the similarity between the first real-world surface and the haptic profile can be a number of matches between the haptic properties associated with the haptic profile and the haptic properties of the first real-world surface

At 1010 real-world object 404B that includes the selected real-world surface is provided in a real-world location relative to user 204 that corresponds to the relative virtual location, where a haptic property of the real-world object corresponds to the haptic profile for virtual object 404A. In some embodiments, the haptic property of real-world object 404B includes one or more of texture, rigidity, temperature, shape, hardness, and deformability.

In some embodiments, the real-world object 404B is provided by moving a mechanical apparatus, such as apparatus 408, to provide the real-world object in the real-world location. In another example, the real-world object 404B is provided by a drone, such as drone 604, to provide the real-world object in the real-world location.

In some embodiments, the real-world object is a haptic swatch that has a plurality of surfaces with differing haptic properties. The virtual world 404B can be based on a predetermined set of real-world haptic properties associated with the haptic swatch. For example, virtual objects in virtual world 404B may have haptic profiles limited to the capabilities of the predetermined set of real-world haptic properties associated with the haptic swatch. In another example, the haptic swatch can include a predetermined set of real-world haptic properties that are based on the haptic profiles for virtual objects in virtual world 404B.

In some embodiments, tracking user 204 can include tracking appendage 412 (e.g., a hand) of user 204. In this example, determining the relative virtual location can include determining the relative virtual location for virtual object 404A relative to an appendage 410 of the virtual user. The providing of real-world object 404B can also include providing the real-world object in a real-world location relative to appendage 412 that corresponds to the relative virtual location.

In some embodiments, a location of the virtual user relative to virtual object 404A can be dynamically tracked while at least one of the virtual user or virtual object 404A moves in virtual world 402A. Real-world object 404B can then be dynamically relocated (or moved) relative to user 204 to correspond with the dynamically tracked relative virtual location.

In some embodiments, it can be determined that a virtual distance between virtual object 404A and the virtual user is less than or equal to a threshold distance. Real-world object 404B can be moved towards or away from user 204 based on the determination that the virtual distance is less than or equal to a threshold. For example, moving real-world object 404B towards or away from user 204 can simulate a haptic property that corresponds to the haptic profile for virtual object 404A (e.g., deformability, stiffness, and the like).

In some embodiments, a set of virtual objects from among a plurality of virtual objects in the virtual reality environment can be identified that have haptic profiles and associated haptic properties that match at least one of the set of predetermined real-world surfaces. For example, based on the described similarity match, haptic profiles for a set of objects within the virtual reality environment can each be compared to the haptic properties for surfaces of a haptic swatch. In some embodiments, a subset of virtual objects will have a haptic profile that matches one of the surfaces, and those virtual objects can be identified as objects where haptic interactions with a virtual user are available. For example, the virtual objects can be displayed with an indicator (e.g., can be glowing, can be proximate to a colored sign, and the like) that indicates the availability of haptic interactions.

Embodiments present rich haptic interactions for users of a virtual reality system. In one embodiment, a virtual user is tracked in a virtual environment, and haptic profiles for virtual objects that user may encounter are identified. For example, a haptic profile for a virtual building can be identified, for instance when the virtual user is proximate to the virtual building. In the real-world, a real-world object with a haptic property that corresponds to the haptic profile of the virtual building can be provided in a location that corresponds to a relative virtual location of the virtual building. For example, a relative location for the virtual building relative to the virtual user can be tracked, and the real-world object can be provided in a real-world location relative to the real-world user that corresponds to the relative virtual location. Based on the provided real-world object, when the virtual user touches the virtual building, the real-world user will feel the haptic property of the real-world object, thus presenting the user rich real-world haptic interactions that correspond to interactions in the virtual world.

The providing can be achieved using a variety of techniques. For example, a haptic swatch that includes multiple surfaces with differing haptic properties can be provided, where the haptic swatch is configured to present a haptic property that corresponds with the haptic profile in the virtual environment (e.g., haptic profile of the virtual tree, virtual building, virtual dog, virtual gum, virtual running motor vehicle, and the like). Other real-world objects that include haptic profiles can similarly be provided. In some embodiments, the real-world objects can be moved to different locations based on the movements of the virtual user and/or virtual object by implementing a variety of techniques. For example, a robotics system or mechanical member can be used to move real-world objects (e.g., haptic swatches) to relative locations that correspond to a user's virtual interactions. In another example, a drone can be used to move the real-world objects to the relative locations.

The features, structures, or characteristics of the disclosure described throughout this specification may be combined in any suitable manner in one or more embodiments. For example, the usage of "one embodiment," "some embodiments," "certain embodiment," "certain embodiments," or other similar language, throughout this specification refers to the fact that a particular feature, structure, or characteristic described in connection with the embodiment may be included in at least one embodiment of the present disclosure. Thus, appearances of the phrases "one embodiment," "some embodiments," "a certain embodiment," "certain embodiments," or other similar language, throughout this specification do not necessarily all refer to the same group of embodiments, and the described features, structures, or characteristics may be combined in any suitable manner in one or more embodiments. One having ordinary skill in the art will readily understand that the invention as discussed above may be practiced with steps in a different order, and/or with elements in configurations which are different than those which are disclosed. Additionally, one of ordinary skill in the art will readily understand that features of the various embodiments may be practiced in various combinations. Therefore, although the invention has been described based upon these preferred embodiments, it would be apparent to those of skill in the art that certain modifications, variations, and alternative constructions would be apparent, while remaining within the spirit and scope of the invention. In order to determine the metes and bounds of the invention, therefore, reference should be made to the appended claims.

## Claims

1. A method for presenting haptic interactions using a virtual reality system, the method comprising:
tracking a virtual user in a virtual reality environment, the virtual user including a virtual representation of a real-world user in a real-world environment;
determining a virtual location in the virtual reality environment for a virtual object, the virtual location being relative to the virtual user;
identifying a haptic profile for the virtual object, the haptic profile corresponding to a real-world surface of a real-world object; and
providing the real-world object to the real-world user at a real-world location of the real-world environment.

2. The method of claim 1, wherein the haptic profile specifies one or more haptic properties that include a texture, rigidity, temperature, shape, hardness, and/or deformability.

3. The method of claim 2, wherein the haptic profile further specifies one or more media properties that include audio or video.

4. The method of claim 2, further comprising:
comparing the haptic properties of a set of predetermined real-world surfaces to haptic properties of the haptic profile to determine a similarity, wherein the real-world surface is selected for the haptic profile based on the similarity between the haptic properties of the real-world surface and the haptic properties of the haptic profile.

5. The method of claim 4, wherein the similarity between the real-world surface and the haptic profile includes a number of matches between the haptic properties of the haptic profile and the haptic properties of the real-world surface.

6. The method of claim 1, wherein providing the real-world object includes moving a mechanical apparatus to provide the real-world object in the real-world location or instructing a drone to provide the real-world object in the real-world location.

7. The method of claim 1, wherein the real-world object includes a haptic swatch that includes at least a portion of a set of predetermined real-world surfaces;
or
wherein the real-world object includes a haptic swatch that includes at least a portion of a set of predetermined real-world surfaces and wherein the virtual environment is based on the set of predetermined real-world surfaces;
or
wherein the real-world object includes a haptic swatch that includes at least a portion of a set of predetermined real-world surfaces; wherein the virtual environment is based on the set of predetermined real-world surfaces; and further comprising:
identifying a set of virtual objects from among a plurality of virtual objects in the virtual reality environment that include haptic profiles that match at least one of the set of predetermined real-world surfaces; and
displaying an indicator in the virtual reality environment for the set of virtual objects that indicates haptic interactions are available for the set of virtual objects;
or
wherein the real-world object includes a haptic swatch that includes at least a portion of a set of predetermined real-world surfaces and wherein the real-world surfaces for the haptic swatch are selected based on one or more haptic profiles for respective virtual objects in the virtual environment.

8. The method of claim 1, further comprising:
determining that a virtual distance between the virtual object and the virtual user is less than or equal to a threshold distance; and
moving, based on the determining that the virtual distance is less than or equal to a threshold distance, the real-world object towards or away from the real-world user, wherein the moving simulates a static haptic property that corresponds to the haptic profile for the virtual object;
or
further comprising:
determining that a virtual distance between the virtual object and the virtual user is less than or equal to a threshold distance;
moving, based on the determining that the virtual distance is less than or equal to a threshold distance, the real-world object towards or away from the real-world user, wherein the moving simulates a static haptic property that corresponds to the haptic profile for the virtual object; and
wherein providing the real-world object further includes moving the real-world object to the real-world user to correspond with the virtual location.

9. The method of claim 1, wherein the virtual location for the virtual object is tracked while at least one of the virtual user or virtual object moves in the virtual reality environment.

10. A device comprising:
one or more processors; and
a memory storing one or more programs for execution by the one or more processors, the one or more programs including instructions for:
tracking a virtual user in a virtual reality environment, the virtual user including a virtual representation of a real-world user in a real-world environment;
determining a virtual location in the virtual reality environment for a virtual object, the virtual location being relative to the virtual user;
identifying a haptic profile for the virtual object, the haptic profile corresponding to a real-world surface of a real-world object; and
providing the real-world object to the real-world user at a real-world location of the real-world environment.

11. The device of claim 10, wherein the haptic profile specifies one or more haptic properties that include a texture, rigidity, temperature, shape, hardness, and/or deformability.

12. The device of claim 11, further comprising:
comparing the haptic properties of a set of predetermined real-world surfaces to haptic properties of the haptic profile to determine a similarity, wherein the real-world surface is selected for the haptic profile based on the similarity between the haptic properties of the real-world surface and the haptic properties of the haptic profile.

13. The device of claim 12, wherein the similarity between the real-world surface and the haptic profile includes a number of matches between the haptic properties of the haptic profile and the haptic properties of the real-world surface.

14. The device of claim 10, wherein providing the real-world object includes moving a mechanical apparatus to provide the real-world object in the real-world location or instructing a drone to provide the real-world object in the real-world location;
or
wherein the real-world object includes a haptic swatch that includes at least a portion of a set of predetermined real-world surfaces.

15. A non-transitory computer readable storage medium storing one or more programs configured to be executed by one or more processors, the one or more programs comprising instructions for:
tracking a virtual user in a virtual reality environment, the virtual user including a virtual representation of a real-world user in a real-world environment;
determining a virtual location for a virtual object, the virtual location being relative to the virtual user;
identifying a haptic profile for the virtual object, the haptic profile corresponding to a real-world surface of a real-world object; and
providing the real-world object to the real-world user at a real-world location of the real-world environment.
